# EUROPEAN PATENT APPLICATION

(11) **EP 1 871 109 A2**
(43) Date of publication of application: **26.12.2007**
(21) Application number: 07001995.5
(22) Date of filing: 30.01.2007
(51) Int. Cl.: H04N 7/14

(54) **Sub-frame metadata distribution server**

(30) Priority: 23.06.2006 US 474032; 20.07.2006 US 491050; 20.07.2006 US 491051; 20.07.2006 US 491019; 18.08.2006 US 506719
(71) Applicant: Broadcom Corporation, Irvine, CA 92617 (US)
(72) Inventor: Bennett, James D., 92672 San Clemente, CA (US)
(74) Representative: Jehle, Volker Armin

(57) **Abstract**

A distribution server includes a communication interface, storage, and processing circuitry. The processing circuitry retrieves a full screen sequence of video and sub-frame metadata relating to the full screen sequence of video. The processing circuitry sub-frame processes the sequence of full screen video using the sub-frame metadata to produce a plurality of sub-frames of video. The processing circuitry assembles the plurality of sub-frames of video to produce an output sequence for a client system. The distribution server may also receive, store, and distribute the sub-frame metadata and/or the video for subsequent use by a video processing system.

## Description

### CROSS REFERENCES TO RELATED APPLICATIONS

The present application is a continuation-in-part of:
1. Utility Application Serial No. 11/474,032 filed on June 23, 2006, and entitled "VIDEO PROCESSING SYSTEM THAT GENERATES SUB-FRAME METADATA," (BP5273);
2. Utility Application Serial No. 11/491,050 filed on July 20, 2006, and entitled "ADAPTIVE VIDEO PROCESSING CIRCUITRY & PLAYER USING SUB-FRAME METADATA" (BP5446);
3. Utility Application Serial No. 11/491,051 filed on July 20, 2006, and entitled "ADAPTIVE VIDEO PROCESSING USING SUB-FRAME METADATA" (BP5447); and
4. Utility Application Serial No. 11/491,019 filed on July 20, 2006, and entitled "SIMULTANEOUS VIDEO AND SUB-FRAME METADATA CAPTURE SYSTEM" (BP5448), all of which are incorporated herein by reference for all purposes.

The present application is related to Utility Application Serial No. 11/xxx,xxx, filed on even data herewith and entitled "PROCESSING OF REMOVABLE MEDIA THAT STORES FULL FRAME VIDEO & SUB-FRAME METADATA" (BP5556), which is incorporated herein by reference for all purposes.

### STATEMENT REGARDING FEDERALLY SPONSORED RESEARCH OR DEVELOPMENT - NOT APPLICABLE

### INCORPORATION-BY-REFERENCE OF MATERIAL SUBMITTED ON A COMPACT DISC - NOT APPLICABLE

### BACKGROUND OF THE INVENTION

### 1. TECHNICAL FIELD OF THE INVENTION

This invention is related generally to video processing devices, and more particularly to the preparation of video information to be displayed on a video player.

### 2. DESCRIPTION OF RELATED ART

Movies and other video content are often captured using 35 mm film with a 16:9 aspect ratio. When a movie enters the primary movie market, the 35 mm film is reproduced and distributed to various movie theatres for sale of the movie to movie viewers. For example, movie theatres typically project the movie on a "big-screen" to an audience of paying viewers by sending high lumen light through the 35 mm film. Once a movie has left the "big-screen," the movie often enters a secondary market, in which distribution is accomplished by the sale of video discs or tapes (e.g., VHS tapes, DVD's, high-definition (HD)-DVD's, Blue-ray DVD's, and other recording mediums) containing the movie to individual viewers. Other options for secondary market distribution of the movie include download via the Internet and broadcasting by television network providers.

For distribution via the secondary market, the 35 mm film content is translated film frame by film frame into raw digital video. For HD resolution requiring at least 1920x1080 pixels per film frame, such raw digital video would require about 25 GB of storage for a two-hour movie. To avoid such storage requirements, encoders are typically applied to encode and compress the raw digital video, significantly reducing the storage requirements. Examples of encoding standards include, but are not limited to, Motion Pictures Expert Group (MPEG)-1, MPEG-2, MPEG-2-enhanced for HD, MPEG-4 AVC, H.261, H.263 and Society of Motion Picture and Television Engineers (SMPTE) VC-1.

To accommodate the demand for displaying movies on telephones, personal digital assistants (PDAs) and other handheld devices, compressed digital video data is typically downloaded via the Internet or otherwise uploaded or stored on the handheld device, and the handheld device decompresses and decodes the video data for display to a user on a video display associated with the handheld device. However, the size of such handheld devices typically restricts the size of the video display (screen) on the handheld device. For example, small screens on handheld devices are often sized just over two (2) inches diagonal. By comparison, televisions often have screens with a diagonal measurement of thirty to sixty inches or more. This difference in screen size has a profound affect on the viewer's perceived image quality.

For example, typical, conventional PDA's and high-end telephones have width to height screen ratios of the human eye. On a small screen, the human eye often fails to perceive small details, such as text, facial features, and distant objects. For example, in the movie theatre, a viewer of a panoramic scene that contains a distant actor and a roadway sign might easily be able to identify facial expressions and read the sign's text. On an HD television screen, such perception might also be possible. However, when translated to a small screen of a handheld device, perceiving the facial expressions and text often proves impossible due to limitations of the human eye.

Screen resolution is limited if not by technology then by the human eye no matter what the size screen. On a small screen however, such limitations have the greatest impact. For example, typical, conventional PDA's and high-end telephones have width to height screen ratios of 4:3 and are often capable of displaying QVGA video at a resolution of 320x240 pixels. By contrast, HD televisions typically have screen ratios of 16:9 and are capable of displaying resolutions up to 1920x1080 pixels. In the process of converting HD video to fit the far lesser number of pixels of the smaller screen, pixel data is combined and details are effectively lost. An attempt to increase the number of pixels on the smaller screen to that of an HD television might avoid the conversion process, but, as mentioned previously, the human eye will impose its own limitations and details will still be lost.

Video transcoding and editing systems are typically used to convert video from one format and resolution to another for playback on a particular screen. For example, such systems might input DVD video and, after performing a conversion process, output video that will be played back on a QVGA screen. Interactive editing functionality might also be employed along with the conversion process to produce an edited and converted output video. To support a variety of different screen sizes, resolutions and encoding standards, multiple output video streams or files must be generated.

Video is usually captured in the "big-screen" format, which server well for theatre viewing. Because this video is later transcoded, the "big-screen" format video may not adequately support conversion to smaller screen sizes. In such case, no conversion process will produce suitable video for display on small screens. Further limitations and disadvantages of conventional and traditional approaches will become apparent to one of ordinary skill in the art through comparison of such systems with various aspects of the present invention.

### BRIEF SUMMARY OF THE INVENTION

The present invention is directed to apparatus and methods of operation that are further described in the following Brief Description of the Drawings, the Detailed Description of the Invention, and the claims.

According to an aspect of the invention, a video server is provided that operates on encoded video data representing a sequence of full frames of video data, the video server comprising:
a communication interface;
memory operable to store encoded video data and sub-frame metadata;
processing circuitry coupled to the communication interface and to the memory, the processing circuitry operable to:
   decode the encoded video data to generate the sequence of full frames of video data;
   sub-frame process the sequence of full frames of video data based upon the sub-frame metadata to generate both a first sequence of sub-frames of video data and a second sequence of sub-frames of video data, the first sequence of sub-frames of video data corresponding to a different region within the sequence of full frames of video data than that of the second sequence of sub-frames of video data;
   generate a third sequence of sub-frames of video data by combining the first sequence of sub-frames of video data with the second sequence of sub-frames of video data; and
   transmit the third sequence of sub-frames of video data via the communication interface.

Advantageously, the processing circuitry encodes the third sequence of sub-frames of video data.

Advantageously, the decoding and sub-frame processing applied by the processing circuitry are integrated.

Advantageously, the processing circuitry tailors the sub-frame metadata based on a characteristic of a target display device before carrying out the sub-frame processing.

Advantageously, the processing circuitry tailors the third sequence of sub-frames of video data based on a characteristic of a target display device.

Advantageously, the processing circuitry performs digital rights management operations regarding a target display device.

Advantageously, the processing circuitry performs billing management regarding a target display device.

According to an aspect of the invention, a distribution server circuitry is provided that supports a full screen sequence of video for a client device, the distribution server circuitry comprising:
a communication interface;
a storage interface;
processing circuitry coupled to the communication interface and to the storage interface;
the processing circuitry retrieving, via the storage interface, both the full screen sequence of video and sub-frame metadata related to the full screen sequence of video, the sub-frame metadata defining a plurality of differing sub-frames within the full screen sequence of video;
the processing circuitry generates tailored video from the full screen sequence of video and the sub-frame metadata; and
the processing circuitry delivers the tailored video to the client device via the communication interface.

Advantageously, the client device has a display characteristic, and the sub-frame metadata is selected based on the display characteristic.

Advantageously, the client device requests the generation of the tailored video via interaction with the processing circuitry via the communication interface.

Advantageously, the generation of the tailored video occurs in advance of a request to deliver the tailored video that is sent from the client device to the processing circuitry via the communication interface.

Advantageously, the processing circuitry supports digital rights management relating to the tailored video.

Advantageously, the processing circuitry supports billing management relating to the tailored video.

According to an aspect of the invention , a distribution server is provided, communicatively coupled to a communication network, that supports a plurality of video sequences for a client system, each of the plurality of video sequences representing a series of full frames of video data, the distribution server comprising:
processing circuitry;
communication interface circuitry that communicatively couples the processing circuitry with the client system via the communication network;
memory that contains a plurality of sub-frame metadata that relates to the plurality of video sequences; and
the processing circuitry cooperates with the client system, the cooperation resulting in the application of first sub-frame metadata of the plurality of sub-frame metadata to a first video sequence of the plurality of video sequences to generate tailored video for the client system.

Advantageously, the cooperation comprising application by the processing circuitry of the first metadata of the plurality of metadata to the first video sequence of the plurality of video sequences to generate the tailored video for the client system.

Advantageously, the cooperation comprising the distribution server delivering the first metadata of the plurality of metadata to the client system, and the client system applying the first metadata of the plurality of metadata to the first video sequence of the plurality of video sequences to generate the tailored video.

Advantageously, the memory also contains the plurality of video sequences.

Advantageously, the client system contains the plurality of video sequences.

Advantageously, at least one display parameter is used to select the first metadata of the plurality of metadata.

Advantageously, the processing circuitry supports digital rights management.

Advantageously, the processing circuitry supports billing services.

According to an aspect of the invention, a method is provided for producing tailored video for a client system by a distribution server, the distribution server communicatively coupled to the client system via a communication network and supports a plurality of video sequences for the client system, each of the plurality of video sequences representing a series of full frames of video data, the method comprising:
receiving a request from the client system via the communication network, the request relating to the tailored video;
based upon the request, accessing first sub-frame metadata of a plurality of sub-frame metadata that relates to the plurality of video sequences, the first sub-frame metadata relating to the client system; and
cooperating with the client system to apply the first sub-frame metadata to a first video sequence of the plurality of video sequences to produce the tailored video for the client system.

Advantageously, cooperating with the client system to apply the first sub-frame metadata to a first video sequence of the plurality of video sequences to produce the tailored video for the client system comprises applying, by the distribution server, the first of the plurality of metadata to the first of the plurality of video sequences to generate the tailored video for the client system.

Advantageously, cooperating with the client system to apply the first sub-frame metadata to a first video sequence of the plurality of video sequences to produce the tailored video for the client system comprises:
the distribution server transmitting the first plurality of metadata to the client system; and
the client system applying the first plurality of metadata to the first of the plurality of video sequences to generate the tailored video.

Advantageously, the method further comprises the distribution server transmitting the first video sequence of the plurality of video sequences to the client system

Advantageously, at least one display parameter is used to select the first of the plurality of metadata.

Advantageously, the method further comprises performing digital rights management operations.

Advantageously, the method further comprises performing billing service operations.

Various features and advantages of the present invention will become apparent from the following detailed description of the invention made with reference to the accompanying drawings.

### BRIEF DESCRIPTION OF THE SEVERAL VIEWS OF THE DRAWING(S)

FIG. 1 is a block diagram illustrating distribution servers and video player systems constructed according to embodiments of the present invention;
FIG. 2 is a system diagram illustrating distribution servers, video capture/sub-frame meta data generation systems, and video player systems constructed according embodiments of the present invention;
FIG. 3 is a system diagram illustrating a video capture/sub-frame metadata generation system constructed according to an embodiment of the present invention;
FIG. 4 is a diagram illustrating exemplary original video frames and corresponding sub-frames;
FIG. 5 is a diagram illustrating an embodiment of a video processing system display providing a graphical user interface that contains video editing tools for creating sub-frames;
FIG. 6 is a diagram illustrating exemplary original video frames and corresponding sub-frames;
FIG. 7 is a chart illustrating exemplary sub-frame metadata for a sequence of sub-frames;
FIG. 8 is a chart illustrating exemplary sub-frame metadata including editing information for a sub-frame;
FIG. 9 is a block diagram illustrating video processing circuitry according to an embodiment of the present invention;
FIG. 10 is a schematic block diagram illustrating adaptive video processing circuitry constructed and operating according to an embodiment of the present invention;
FIG. 11 is a flow chart illustrating a process for video processing according to an embodiment of the present invention;
FIG. 12 is a functional block diagram illustrating a combined video/metadata distribution server constructed and operating according to an embodiment of the present invention;
FIG. 13 is a functional block diagram illustrating a metadata distribution server constructed and operating according to an embodiment of the present invention;
FIG. 14 is a schematic block diagram illustrating a metadata distribution server constructed and operating according to an embodiment of the present invention;
FIG. 15 is a flow chart illustrating metadata/video distribution and processing operations according to an embodiment of the present invention; and
FIG. 16 is a flow chart illustrating metadata/video distribution and processing operations according to an embodiment of the present invention.

### DETAILED DESCRIPTION OF THE INVENTION

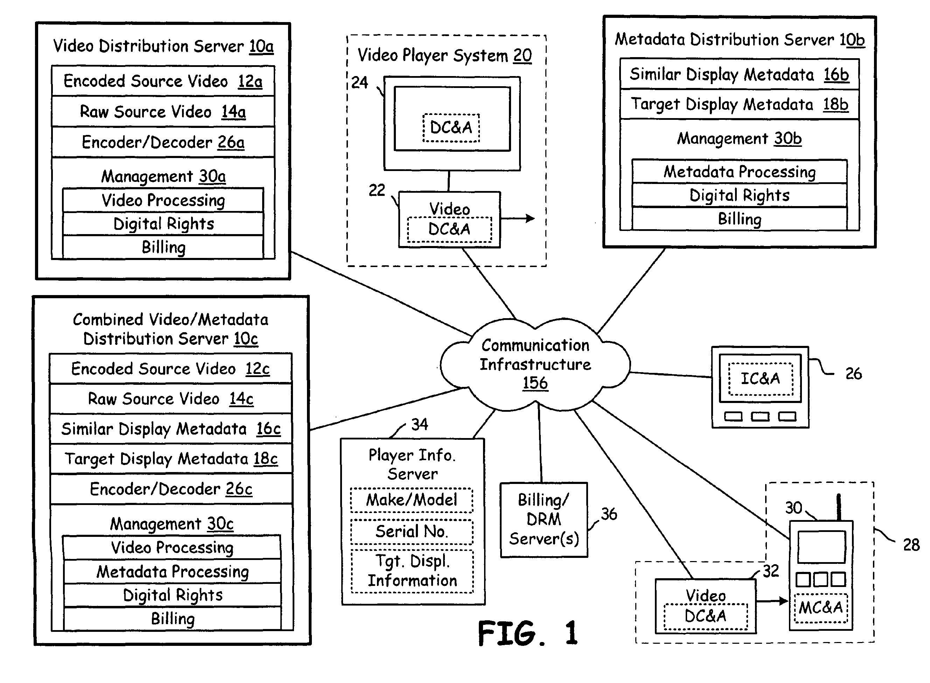

FIG. 1 is a block diagram illustrating distribution servers and video player systems constructed according to embodiments of the present invention. The distribution servers of the present invention include a video distribution server 10a, a metadata distribution server 10b, and a combined video/metadata distribution server 10c. Video player systems of the present invention include video player systems 20, 26, and 28. Further illustrated are a player information server 34 and a billing/DRM server 36. The systems of FIG. 1 supports the storage of video, the storage of metadata, the distribution of video, the distribution of metadata, the processing of target device video based upon metadata, the distribution of target device video, the presentation of video, and other operations that will be described further herein. The components illustrated in FIG. 1 are interconnected by a communication infrastructure 156 that is one or more of the Internet, Intranet(s), Local Area Network(s) (LANs), Wide Area Networks (WANs), Cable Network(s), Satellite communication network(s), Cellular Data Network(s), Wireless Wide Area Networks (WWANs), Wireless Local Area Network(s), and/or other wired/wireless networks.

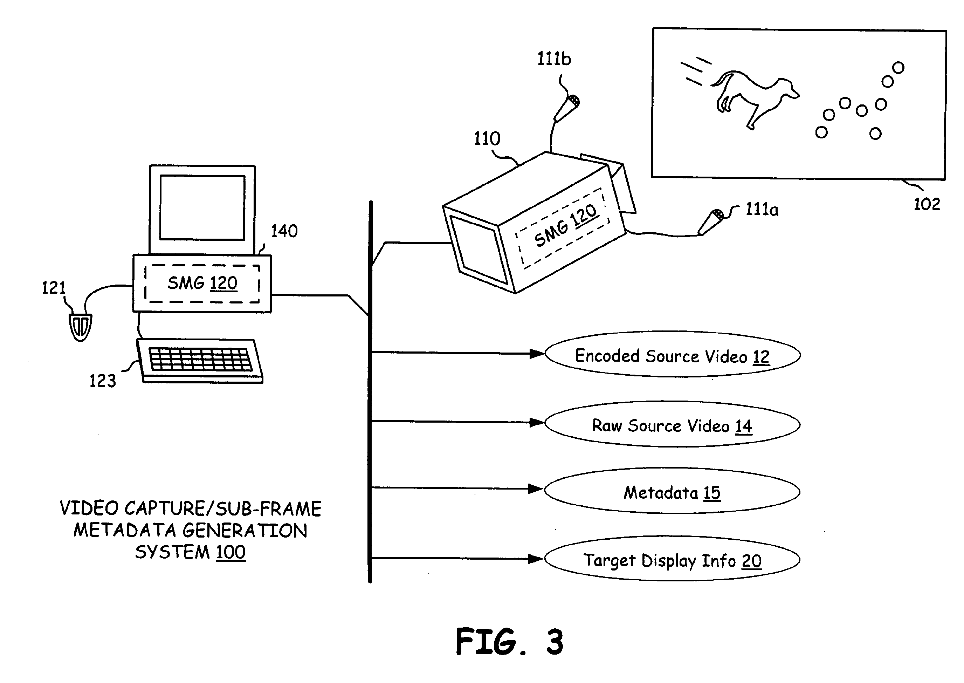

The video distribution server 10a receives, stores, and distributes encoded source video 12a, receives, stores, and distributes raw source video 14a, and performs encoding/decoding operations and management operations. As will be described further herein with reference to FIGs. 3 - 11, source video is generally captured in a full frame format. This (full frame) source video may be encoded and stored as encoded source video 12a or stored in its raw format as raw source video 14a. The source video includes a plurality of sequences of full frames of video data. This plurality of sequences of full frames of video data are captured in a particular source format, which may correspond to an intended video player system such as a theater screen, a high definition television system, or another video player system format. Examples of such a format include the High Definition (HD) television formats, standard television formats, Motion Pictures Expert Group (MPEG)-1, MPEG-2, MPEG-2-enhanced for HD, MPEG-4 AVC, H.261, H.263 formats, and Society of Motion Picture and Television Engineers (SMPTE) VC-1 formats, for example. The source video, whether encoded source video 12a or raw source video 14a, may not be presented satisfactorily on video player systems 20, 26, and 28 because of the source video's resolution, aspect ratio, contrast, brightness, coloring, frame rate, or other characteristics. Thus, generally, the systems of FIG. 1 are employed to operate upon the source video to convert the source video into a format appropriate for video player system 20, 26, and/or 28.

The video distribution server 10a includes an encoder/decoder 26a that is operable to encode raw source video 14a into a desired encoded format, and to decode encoded source video 12a from its encoded format to an unencoded format. Management circuitry 30a is operable to sub-frame process the encoded source video 12a (or the raw source video 14a) based upon sub-frame metadata that is received from another source, e.g., metadata distribution server 10b or combined video/distribution server 10c. As will be described further with reference to the metadata distribution server 10b and to the combined video/metadata distribution server 10c, the video distribution server 10a may process a sequence of full frames of video data (source video) using metadata to produce sub-frames of video data having characteristics that correspond to one or more of target video player systems 20, 26, and 28.

The management circuitry 30a performs digital rights management (DRM) operations and billing operations. Generally, DRM operations determine whether a requesting device, e.g., video player system 20, 26, or 28, has rights to receive source video. Further, the billing operations cause billing to occur when required. The DRM operations and billing operations of the management circuitry may require the video distribution server 10a to interact with billing/DRM server(s) 36 to coordinate rights management and billing operations.

Metadata distribution server 10b is operable to receive, store, and distribute metadata. The metadata distribution server 10b stores similar display metadata 16b and target display metadata 18b. The metadata distribution server 10b may serve the similar display metadata 16b or the target display metadata 18b to any of the video distribution server 10a, the combined video/metadata distribution server 10c, and/or any of video player systems 20, 26, or 28. Metadata, also referred to as sub-frame metadata herein, is employed to process a sequence of full frames of video data to generate both a first sequence of sub-frames of video data and a second sequence of sub-frames of video data. In one operation, the first sequence of sub-frames of video data corresponds to a different region within the sequence of full frames of video data than does the second sequence of sub-frames of video data. The sub-frame processing operations of the management circuitry 30b generate a third sequence of sub-frames of video data by combining the first sequence of sub-frames of video data with the second sub-frames of video data. The third sequence of sub-frames of video data corresponds to a target video player (client system) for display on a corresponding video display of the client system. The manner in which sub-frame metadata is created and the manner in which it is used for such sub-frame processing operations is described further herein in detail with reference to FIGS. 3-15.

The metadata distribution server 10b may perform sub-frame processing operations (as described above) using its management circuitry 30b. The management circuitry 30b may also operate upon similar display metadata 16b to produce target display metadata 18b. The target display metadata 18b may be stored within metadata distribution server 10b and later served to any of the video distribution server 10a, the combined video/metadata distribution server 10c, and/or any of the video player systems 20, 26, or 28. The management circuitry 30b of the metadata distribution server 10b further includes DRM and billing operations/circuitry. The management circuitry 30b of the metadata distribution server 10b may interact via the communication infrastructure 156 with the billing/DRM servers 36.

In processing similar display metadata 16b to produce the target display metadata 18b, the management circuitry 30b may access player information stored on and served by player information server 34. The player information server 34 interacts with the metadata distribution server 10b (and the other distribution servers 10a and 10c) to determine either a make/model or a serial number of a target video player system 20, 26, or 28. Based upon this determination, the player information server 34 provides target display information via the communication infrastructure 156 to the metadata distribution server 10b. The metadata distribution server 10b then uses the target display information to process the similar display metadata 16b to produce the target display metadata 18b. The target display metadata 18b produced according to these operations is targeted to a particular display of video player system 20, 26, or 28. In a subsequent operation, a video player system 20, 26, or 28 requests and receives the target display metadata 18b and uses the target display metadata 18b in its sub-frame processing operations. The video distribution server 10a and/or the combined video/metadata distribution server 10c may later receive the target display metadata 18b and use it with its sub-frame processing operations.

The combined video/metadata distribution server 10c effectively combines the operations of the video distribution server 10a and the operations of the metadata distribution server 10b and performs additional processing operations. The combined video/metadata distribution server 10c stores and distributes encoded source video 12c, raw source video 14c, similar display metadata 16c, and target display metadata 18c. The combined video/metadata distribution server 10c includes an encoder/decoder 26c that is operable to encode and decode both video and metadata. The combined video/metadata distribution server 10c is operable to receive source video (either encoded source video 12c or raw source video 14c), store the source video, and serve the source video. Further, the combined video/metadata distribution server 10c is operable to receive similar display metadata 16c and/or target display metadata 18c, store the metadata, and to serve the metadata.

Video processing operations of the management circuitry 30c of the combined video/metadata distribution server 10c sub-frame processes encoded source video 12c and/or raw source video 14c using similar display metadata 16c and/or target display metadata 18c to produce both a first sequence of sub-frames of video data and a second sequence of sub-frames of video data. The first sequence of sub-frames of video data corresponds to a different region within the sequence of full frames of video data than that of the second sequence of sub-frames of video data. The management circuitry 30c sub-frame processing operations then generate a third sequence of sub-frames of video data by combining the first sequence of sub-frames of video data with the second sequence of sub-frames of video data. The third sequence of sub-frames of video data may be stored locally or served to any of the video player systems 20, 26, or 28 or to the video distribution server 10a for later serving operations. In performing its video processing operations, the management circuitry 30c may further tailor the third sequence of sub-frames of video data to conform particularly to a target video display 20, 26, or 28. With these tailoring operations, the video processing operations of the management circuitry 30c may employ target display information received from player information server 34. Further, the video processing operations and management circuitry 30c may use target display information that was previously stored locally.

The management circuitry 30c and combined video/metadata distribution server 10c may further operate upon metadata using its metadata processing operations. These metadata processing operations may operate upon similar display metadata 16c to produce target display metadata 18c based upon target display information received from player information server 34 or that was served locally. The target display metadata 18c produced by the metadata processing operations of management circuitry 30c particularly corresponds to one or more video player systems 20, 26, or 28.

The management circuitry 30c of the combined video/metadata distribution server 10c further performs DRM operations and billing operations. In performing these digital rights operations and billing operations, the management circuitry 30c of the combined video/metadata distribution server 10c may interact with the billing/DRM servers 36 via the communication infrastructure 156.

Video player systems of the present invention may be contained within a single device or distributed among multiple devices. The manner in which a video player system of the present invention may be contained within a single device is illustrated by video player 26. The manner in which a video player system of the present invention is distributed among multiple devices is illustrated by video player systems 20 and 28. Video player system 20 includes video player 22 and video display device 24. Video player system 28 includes video player and video display device 30.

The functionality of the video player systems of FIG. 1 includes, generally, three types of functionalities. A first type of functionality is multi-mode video circuitry and application (MC&A) functionality. The MC&A functionality may operate in either/both a first mode and a second mode. In a first mode of operation of the MC&A functionality, the video display device 30, for example, receives source video and metadata via the communication infrastructure 156 (or via a media such as a DVD, RAM, or other storage in some operations). The video display device 30, in the first mode of operation of the MC&A functionality, uses both the source video and the metadata for processing and playback operations resulting in the display of video on its video display.

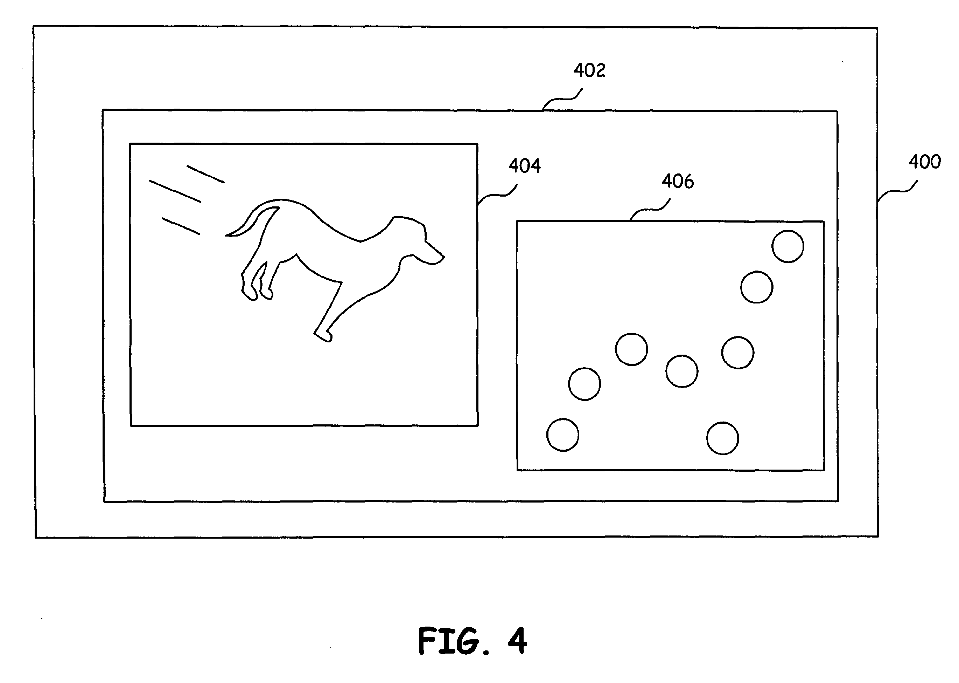

The source video received by video display device 30 may be encoded source video 12a/12c or raw source video 14a/14c. The metadata may be similar display metadata 16b/16c or target display metadata 18b/18c. Generally, encoded source video 12a/12c and raw source video 14a/14c have similar content through the former is encoded while the later is not encoded. Generally, source video includes a sequence of full-frames of video data such that may be captured by a video camera. The capture of the full-frames of video data will be described further with reference to FIGs. 4 through 9.

Metadata (16b, 16c, 18b, or 18c) is additional information that is used in video processing operations to modify the sequence of full frame of video data particularly to produce video for play back on a target video display of a target video player. The manner in which metadata (16b, 16c, 18b, or 18c) is created and its relationship to the source video (12a, 12c, 14a, or 14c) will be described further with reference to FIG. 4 through FIG. 9. With the MC&A first mode operations, video display device 30 uses the source video (12a, 12c, 14a, or 14c) and metadata (16b, 16c, 18b, or 18c) in combination to produce an output for its video display. Generally, similar display metadata 16b or 16c has attributes tailored to a class or group of targeted video players. The target video players within this class or group may have similar screen resolution, similar aspect radios, or other similar characteristics that lend well to modifying source video to produce modified source video for presentation on video displays of the class of video players. Alternatively, the target display metadata 18b or 18c includes information unique to a make/model/type of video player. When a video display device 30 uses the target display metadata 18b or 18c for modification of the source video (12a, 12c, 14a, or 14c), the modified video is particularly tailored to the video display of the video display device 30.

In the second mode of operation of the MC&A functionality of the video player system of the present invention, the video display device 30 receives and displays video (encoded video or raw video) that has been processed previously using metadata (16b, 16c, 18b, or 18c) by another video player 32. For example, with the video player system 28, video player 32 has previously processed the source video (12a, 12c, 14a, or 14c) using the metadata (16b, 16c, 18b, or 18c) to produce an output to video display device 30. With this second mode of operation of the MC&A functionality, the video display device 30 receives the output of video player 32 for presentation, and presents such output on its video display. The MC&A functionality of the video display device 30 may further modify the video data received from the video player 32.

Another functionality employed by one or more of the video player system 26 of FIG. 1 includes Integrated Video Circuitry and Application functionality (IC&A). The IC&A functionality of the video player system 26 of FIG. 1 receives source video (12a, 12c, 14a, or 14c) and metadata (16b, 16c, 18b, or 18c) and processes the source video (12a, 12c, 14a, or 14c) and the metadata (16b, 16c, 18b, or 18c) to produce video output for a display of the video player system 26. The video player system 26 receives both the source video (12a, 12c, 14a, or 14c) and the metadata (16b, 16c, 18b, or 18c) via the communication infrastructure 156 (and via media in some operations) and its IC&A functionality processes the source video (12a, 12c, 14a, or 14c) and metadata (16b, 16c, 18b, or 18c) to produce video for display on the video display of the video player system 26.

According to another aspect of FIG. 1, a video player system 22 or 28 may include Distributed video Circuitry and Application (DC&A) functionality. The DC&A functionality associated with video player 32 receives source video (12a, 12c, 14a, or 14c) and metadata (16b, 16c, 18b, or 18c) and produces sub-frame video data by processing of the source video (12a, 12c, 14a, or 14c) in conjunction with the metadata (16b, 16c, 18b, or 18c). The DC&A functionality of video players 22 and 32 present outputs to corresponding video display devices 24 and 30, respectively. The corresponding video display devices 24 and 30, using their respective functionality, may further modify the received video inputs and then present video upon their respective displays.

Depending on the particular implementation and the particular operations of the video player systems of FIG. 1, their functions may be distributed among multiple devices. For example, with video player system 20, video player 22 and video display device 24 both include DC&A functionality. The distributed DC&A functionality may be configured in various operations to share processing duties that either or both could perform. Further, with video player system 28, video player 32, and video display device 30 may share processing functions that change from time to time based upon particular current configuration of the video player system 28.

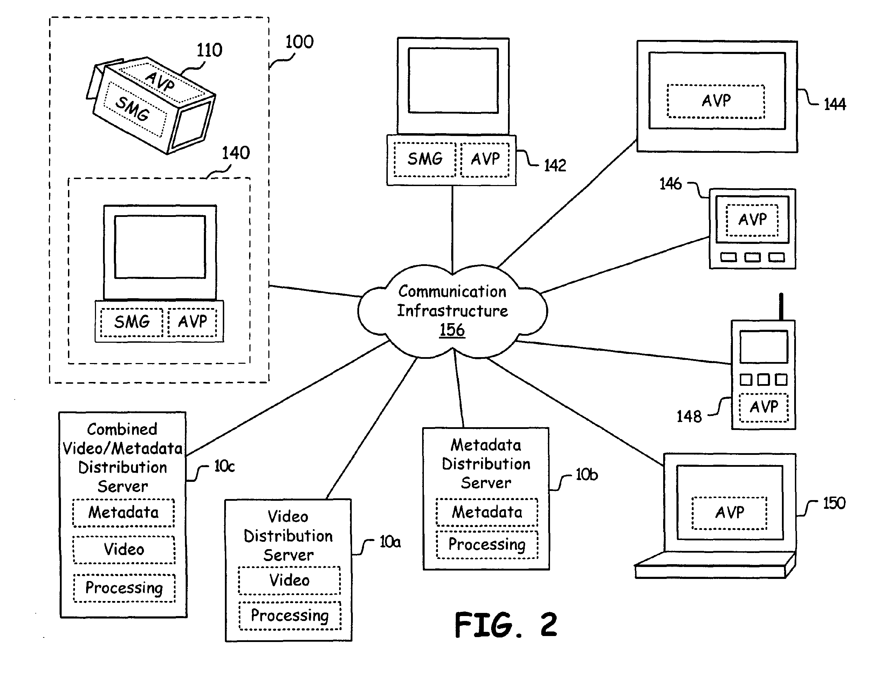

FIG. 2 is a system diagram illustrating distribution servers, video capture/sub-frame metadata generation systems, and video player systems constructed according embodiments of the present invention. The system of FIG. 2 include adaptive video processing (AVP) systems and sub-frame metadata generation (SMG) systems as well as a video distribution server 10a, a metadata distribution server 10b, and a combined video/metadata distribution server 10c. Generally, the SMG systems and AVP systems may be distributed amongst one, two, or more than two components within a communication infrastructure.

A sub-frame metadata generation system 100 includes one or both of a camera 110 and a computing system 140. The camera 110, as will be further described with reference to FIGs. 3 through 9, captures an original sequence of full frames of video data. Then, the computing system 140 and/or the camera 110 generate metadata based upon sub-frames identified by user input. The sub-frames identified by user input are employed to indicate what sub-portions of scenes represented in the full frames video data are to be employed in creating video specific to target video players. These target video players may include video players 144, 146, 148, and 150.

The AVG system illustrated in FIG. 2 is employed to create a sequence of sub frames of video data from the full frames of video data and metadata that is generated by the SMG system. The AVG system may be stored within one or more of the digital computer 142 or video displays 144, 146, 148, and/or 150. With the metadata and source video stored within the distribution servers 10a, 10b, or 10c of FIG. 2, AVP may be later performed. Alternatively, the AVP may perform sub-frame processing immediately after capture of the source video by camera 110 and the creation of metadata by the SMG application of camera 110, computing system 140, and/or computing system 142.

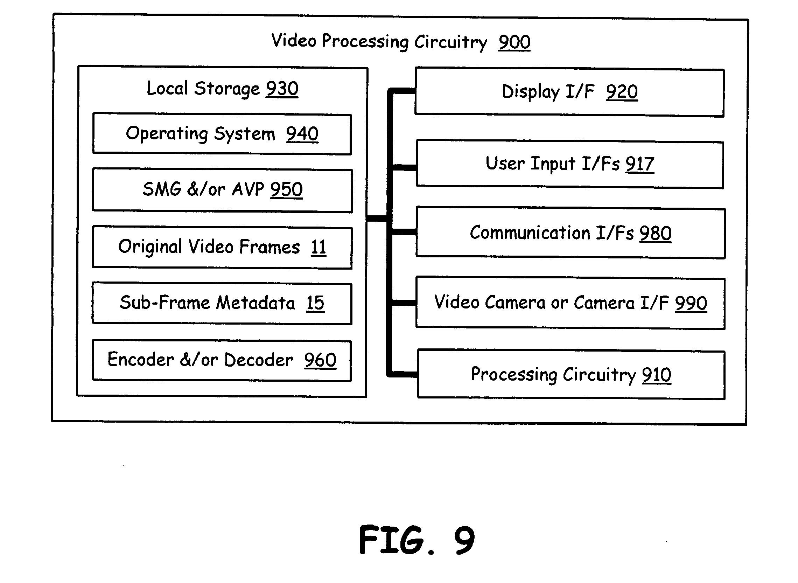

Communication system 156 includes various communication infrastructures such as the Internet, one or more Wide Area Networks (WANs), one or more Local Area Networks (LANs), one ore more Wireless Wide Area Networks (WWANs), one ore more Wireless Local Area Networks (WLANs), and/or other types of networks. The communication infrastructure 156 supports the exchange of source video, metadata, target display information, output, display video, and DRM/ billing signaling as will be described further herein with reference to FIGs. 9-16. Alternatively, the video data and other inputs and outputs may be written to a physical media and distributed via the physical media. The physical media may be rented in a video rental store to subscribers that use the physical media within a physical media video player.

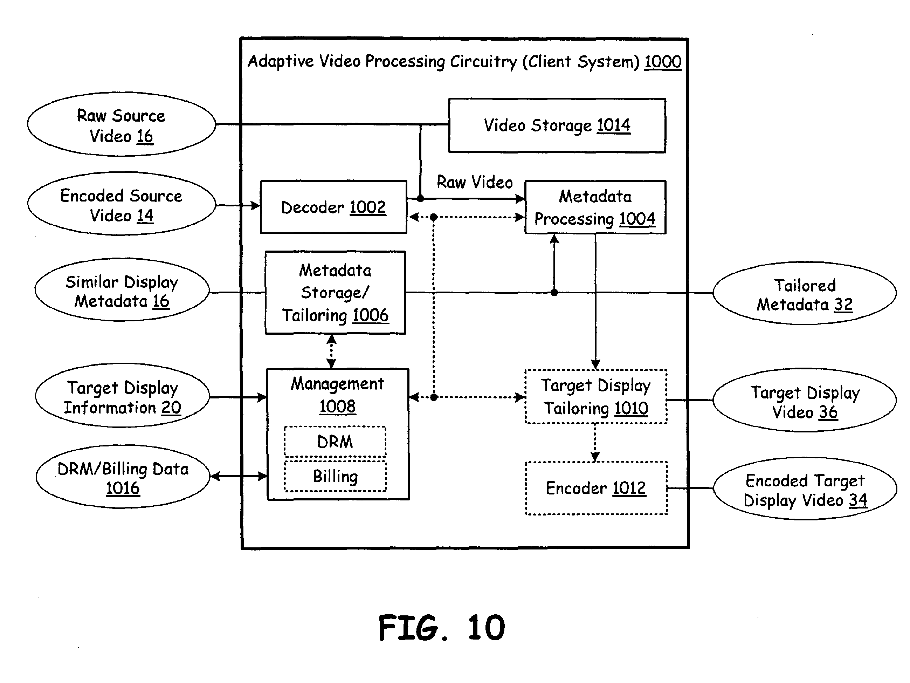

The AVP operations of the present invention operate upon full frames of video data using metadata and other inputs to create target video data for presentation on the video player systems 144, 146, 148, and/or 150. The video data, metadata, and target video display information that are used to create the target display video for the players 144, 146, 148, and 150 may be received from a single source or from multiple sources. For example, the metadata distribution server 10b may store metadata while the video distribution server 10a may store source video. The combined video/metadata distribution server 10c may store both metadata and source video. The AVP operations of the present invention may be performed by one or more of the computing system 142, camera 110, computing system 140, displays 144, 146, 148 and/ or 150, and servers 10a, 10b, and 10c. These operations, as will be subsequently described with reference to FIGs. 10 through 15, create target display video for a particular target video player.

Distribution servers 10a, 10b, and 10c distribute both video and metadata for subsequent use by the video players 144, 146, 148, and/or 150. Further, the video distribution server 10a and/or the combined video/metadata distribution server 10c may deliver target display video to any of the video players 144, 146, 148, and/or 150. The video data delivered by either of the video distribution server 10a or the combined video/metadata distribution server 10c may be non-tailored video or tailored video. When non-tailored video is distributed by the distribution server 10a or 10c, the AVP operations of the video players 142, 144, 146, and/or 150 may further operate upon the received video data prior to its display. When the combined video/metadata distribution server 10c or the video distribution server 10a delivers target video, a receiving video player 144, 146, 142, or 150 simply plays the received target video. Of course, the target video would be created by the combined video/metadata distribution server 10c corresponding to target display information of a respective video player.

In another operation according to this present invention as illustrated in FIG. 2, metadata distribution server 10b serves similar display metadata or target display metadata to one or more of the video players 144, 146, 148, and/or 150. When the metadata distribution server 10b distributes similar display metadata to a video player, the video player may further process the similar display metadata to produce target display metadata for further use in sub-frame processing. Then, the video player 142, 144, 146, 148, or 150 would use the tailored metadata to process video data to produce sub-frame video data for display by the player.

Once target display metadata and/or tailored video are created, it may be stored on either of the video distribution server 10a or the combined video/metadata distribution server 10c for later distribution. Thus, tailored metadata and/or target display metadata may be created once and distributed a number of times by metadata distribution server 10b and/or the combined video/metadata distribution server 10c. Any distribution of video and/or metadata may be regulated based upon digital rights management operations and billing operations enabled by the processing circuitry of video distribution server 10a, metadata distribution server 10b, and/or combined video/metadata distribution server 10c. Thus, for example, a user of video player 150 may interact with any of distribution servers 10a, 10b, and/or 10c to verify his/her right to receive metadata and/or video. The ability of the video player 150 to receive source video, processed video, similar display metadata, and/or target display metadata/tailored metadata, may be based upon the possession of the video in a different format. For example, a user of video player 150 may have purchased a digital video disk (DVD) containing a particular movie and now possess the digital video disk. This possession of the DVD may be sufficient for the subscriber to obtain metadata corresponding to this particular programming and/or to download this programming in an electronic format (differing format) from the video distribution server 10a or the combined video/metadata distribution server 10c. Such operation may require further interaction with a billing and/or a digital rights management server such as server 36 of FIG. 1.

Rights to source video and metadata may be coincident such that if a user has rights to the source video he/she also has rights to the corresponding metadata. However, a system is contemplated and embodied herein that requires separate digital rights to the metadata apart from rights to the source video. In such case, even though a user may have rights to view source video based upon ownership of a DVD, the user may be required to pay additionally to obtain metadata corresponding to the source video. Such would be the case because the metadata has additional value for subsequent use in conjunction with the source video. Such is the case because the source video may not be satisfactorily viewable on a video player 148 having a smaller screen. Thus, the user of video player 148 may simply pay an additional amount of money to obtain metadata that is subsequently used for sub-frame processing of the serviced video data to produce tailored video for the video player 148.

This concept may be further extended to apply to differing versions of metadata. For example, a user owns video player 148 and video player 146. However, the screens of these video players 146 and 148 have different characteristics. Because of the differing characteristics of video players 146 and 148, differing target display video would be required for playback on each of these video players 146 and 148. Differing versions of metadata are required to produce tailored video for the video players 146 and 148. Video player 146 corresponds to first target display metadata while video player 148 corresponds to the second target display metadata. Even though the user owns both video players 146 and 148, he/she may have rights to only one or the other of the target display metadata. Thus, the user must expend additional funds to obtain additional target display metadata. Alternatively, a particular user may purchase rights to all available metadata for particular source video or for a library of source video. Such rights purchased by the user of video player 146 and 148 would allow the user not only to access target display metadata corresponding to video players 146 and 148 but to target display metadata corresponding to any video players 142, 144, and 150. This type of subscription to a metadata library may be considered to be an encompassing subscription while purchasing rights to a single version of the tailored metadata may be considered to be a limited rights subscription.

These concepts may be further applied to differing versions of target display video. For example, a user may purchase rights to a single version of target display video that corresponds to a target video player 148, for example. However, a second level of subscription may allow the user to access/use multiple versions of tailored display video corresponding to program or library of programming. Such a subscription may be important to a user that has a number of differing types of video players 142 - 150. With this subscription type, the subscriber could therefore download differing versions of target display video from the video distribution server 10a or combined video/metadata distribution server 10c to any of his or her possessed video players.

FIG. 3 is a system diagram illustrating a video capture/sub-frame metadata generation system constructed according to an embodiment of the present invention. The video capture/sub-frame metadata system 100 of FIG. 3 includes a camera 110 and an SMG system 120. The video camera 110 captures an original sequence of full frames of video data relating to scene 102. The video camera 110 may also capture audio data via microphones 111A and 111B. The video camera 110 may provide the full frames of video data to console 140 or may execute the SMG system 120. The SMG system 120 of the video camera 110 or console 140 receives input from a user via user input device 121 or 123. Based upon this user input, the SMG system 120 displays one or more sub frames upon a video display that also illustrates the sequence of full frames of video data. Based upon the sub frames created from user input and additional information, the SMG system 120 creates metadata 15. The video data output of the video capture/sub frame metadata generation system 100 is one or more of the encoded source video 12 or raw source video 14. The video capture/sub frame metadata generation 100 also outputs metadata 15 that may be similar display metadata and/or target display metadata. The video capture/sub-frame metadata generation system 100 may also output target display information 20.

The sequence of original video frames captured by the video camera 110 is of scene 102. The scene 102 may be any type of a scene that is captured by a video camera 110. For example, the scene 102 may be that of a landscape having a relatively large capture area with great detail. Alternatively, the scene 102 may be head shots of actors having dialog with each other. Further, the scene 102 may be an action scene of a dog chasing a ball. The scene 102 type typically changes from time to time during capture of original video frames.

With prior video capture systems, a user operates the camera 110 to capture original video frames of the scene 102 that were optimized for a "big-screen" format. With the present invention, the original video frames will be later converted for eventual presentation by target video players having respective video displays. Because the sub-frame metadata generation system 120 captures differing types of scenes over time, the manner in which the captured video is converted to create sub-frames for viewing on the target video players also changes over time. The "big-screen" format does not always translate well to smaller screen types. Therefore, the sub-frame metadata generation system 120 of the present invention supports the capture of original video frames that, upon conversion to smaller formats, provide high quality video sub-frames for display on one or more video displays of target video players.

The encoded source video 12 may be encoded using one or more of a discrete cosine transform (DCT)-based encoding/compression formats (e.g., MPEG-1, MPEG-2, MPEG-2-enhanced for HD, MPEG-4 AVC, H.261 and H.263), motion vectors are used to construct frame or field-based predictions from neighboring frames or fields by taking into account the inter-frame or inter-field motion that is typically present. As an example, when using an MPEG coding standard, a sequence of original video frames is encoded as a sequence of three different types of frames: "I" frames, "B" frames and "P" frames. "I" frames are intra-coded, while "P" frames and "B" frames are inter-coded. Thus, I-frames are independent, i.e., they can be reconstructed without reference to any other frame, while P-frames and B-frames are dependent, i.e., they depend upon another frame for reconstruction. More specifically, P-frames are forward predicted from the last I-frame or P-frame and B-frames are both forward predicted and backward predicted from the last/next 1-frame or P-frame. The sequence of IPB frames is compressed utilizing the DCT to transform NxN blocks of pixel data in an "I", "P" or "B" frame, where N is usually set to 8, into the DCT domain where quantization is more readily performed. Run-length encoding and entropy encoding are then applied to the quantized bitstream to produce a compressed bitstream which has a significantly reduced bit rate than the original uncompressed video data.

FIG. 4 is a diagram illustrating exemplary original video frames and corresponding sub-frames. As is shown, the video display 400 has a viewing area that displays the sequence of original video frames representing the scene 102 of FIG. 3. According to the embodiment of FIG. 4, the SMG system 120 is further operable to respond to additional signals representing user input by presenting, in addition to sub-frame 402, additional sub-frames 404 and 406 on the video display 400 in association with the sequence of original video frames. Each of these sub-frames 402 would have an aspect ratio and size corresponding to one of a plurality of target video displays. Further, the SMG system 120 produces metadata 15 associated with each of these sub-frames 402, 404, and 406. The metadata 15 that the sub-frame metadata generation system 120 generates that is associated with the plurality of sub-frames 402, 404, and 406 enables a corresponding target video display to produce a corresponding presentation on its video display. In the example of FIG. 4, the SMG system 120 includes a single video display 400 upon which each of the plurality of sub-frames 402, 404, and 406 are displayed. In another embodiment, each of the plurality of sub-frames generated by the video processing system may be independently displayed on a corresponding target video player.

With the example of FIG. 4, at least two of the sub-frames 404 and 406 of the set of sub-frames may correspond to a single frame of the sequence of original video frames. Thus, for example, with a particular target video player, sub-frames 404 and 406 and the related video information contained therein may be presented at differing times on a single target video player. With the example of FIG. 4, a first portion of video presented by the target video player may show a dog chasing a ball as contained in sub-frame 404 while a second portion of video presented by the target video player shows the bouncing ball as it is illustrated in sub-frame 406. Thus, with this example, video sequences of a target video player that are adjacent in time are created from a single sequence of original video frames.

Further, with the example of FIG. 4, at least two sub-frames of the set of sub-frames may include an object whose spatial position varies over the sequence of original video frames. In such frames, the spatial position of the sub-frame 404 that identifies the dog would vary over the sequence of original video frames with respect to the sub-frame 406 that indicates the bouncing ball. Further, with the example of FIG. 4, two sub-frames of the set of sub-frames may correspond to at least two different frames of the sequence of original video frames. With this example, sub-frames 404 and 406 may correspond to differing frames of the sequence of original video frames displayed on the video display 400. With this example, during a first time period, sub-frame 404 is selected to display an image of the dog over a period of time. Further, with this example, sub-frames 406 would correspond to a different time period to show the bouncing ball. With this example, at least a portion of the set of sub-frames 404 and 406 may correspond to a sub-scene of a scene depicted across the sequence of original video frames. This sequence depicted may be depicted across the complete display 400 or sub-frame 402.

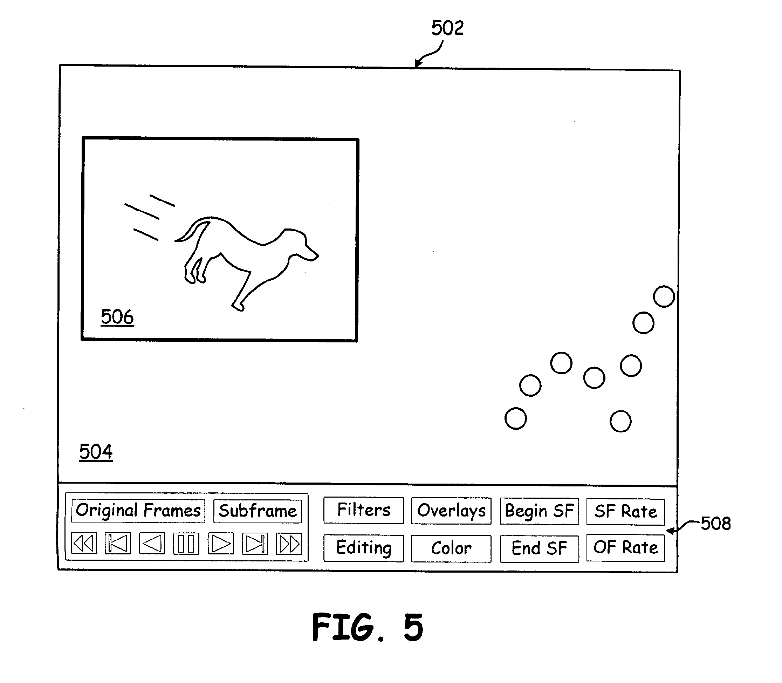

FIG. 5 is a diagram illustrating an embodiment of a video processing system display providing a graphical user interface that contains video editing tools for creating sub-frames. On the video processing display 502 is displayed a current frame 504 and a sub-frame 506 of the current frame 504. The sub-frame 506 includes video data within a region of interest identified by a user. Once the sub-frame 506 has been identified, the user may edit the sub-frame 506 using one or more video editing tools provided to the user via the GUI 508. For example, as shown in FIG. 5, the user may apply filters, color correction, overlays, or other editing tools to the sub-frame 506 by clicking on or otherwise selecting one of the editing tools within the GUI 508. In addition, the GUI 508 may further enable the user to move between original frames and/or sub-frames to view and compare the sequence of original sub-frames to the sequence of sub-frames.

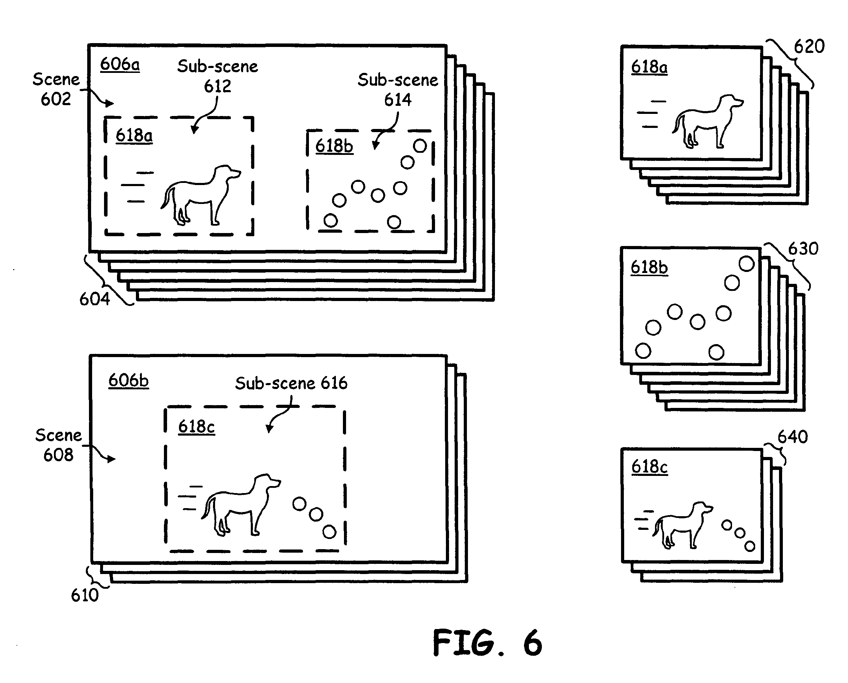

FIG. 6 is a diagram illustrating exemplary original video frames and corresponding sub-frames. In FIG. 6, a first scene 602 is depicted across a first sequence 604 of original video frames 606 and a second scene 608 is depicted across a second sequence 610 of original video frames 606. Thus, each scene 602 and 608 includes a respective sequence 604 and 610 of original video frames 606, and is viewed by sequentially displaying each of the original video frames 606 in the respective sequence 604 and 610 of original video frames 606.

However, to display each of the scenes 602 and 608 on a small video display without reducing the viewer's perceived video quality, each of the scenes 602 and 608 can be divided into sub-scenes that are separately displayed. For example, as shown in FIG. 6, within the first scene 602, there are two sub-scenes 612 and 614, and within the second scene 608, there is one sub-scene 616. Just as each scene 602 and 608 may be viewed by sequentially displaying a respective sequence 604 and 610 of original video frames 606, each sub-scene 612, 614, and 616 may also be viewed by displaying a respective sequence of sub-frames 618 (618a, 618b, and 618c).

For example, looking at the first frame 606a within the first sequence 604 of original video frames, a user can identify two sub-frames 618a and 618b, each containing video data representing a different sub-scene 612 and 614. Assuming the sub-scenes 612 and 614 continue throughout the first sequence 604 of original video frames 606, the user can further identify two sub-frames 618a and 618b, one for each sub-scene 612 and 614, respectively, in each of the subsequent original video frames 606a in the first sequence 604 of original video frames 606. The result is a first sequence 620 of sub-frames 618a, in which each of the sub-frames 618a in the first sequence 620 of sub-frames 618a contains video content representing sub-scene 612, and a second sequence 630 of sub-frames 618b, in which each of the sub-frames 618b in the second sequence 630 of sub-frames 618b contains video content representing sub-scene 614. Each sequence 620 and 630 of sub-frames 618a and 618b can be sequentially displayed. For example, all sub-frames 618a corresponding to the first sub-scene 612 can be displayed sequentially followed by the sequential display of all sub-frames 618b of sequence 630 corresponding to the second sub-scene 614. In this way, the movie retains the logical flow of the scene 602, while allowing a viewer to perceive small details in the scene 602.

Likewise, looking at the first frame 606b within the second sequence 610 of original video frames 606, a user can identify a sub-frame 618c corresponding to sub-scene 616. Again, assuming the sub-scene 616 continues throughout the second sequence 610 of original video frames 606, the user can further identify the sub-frame 618c containing the sub-scene 616 in each of the subsequent original video frames 606 in the second sequence 610 of original video frames 606. The result is a sequence 640 of sub-frames 618c, in which each of the sub-frames 618c in the sequence 640 of sub-frames 618c contains video content representing sub-scene 616.

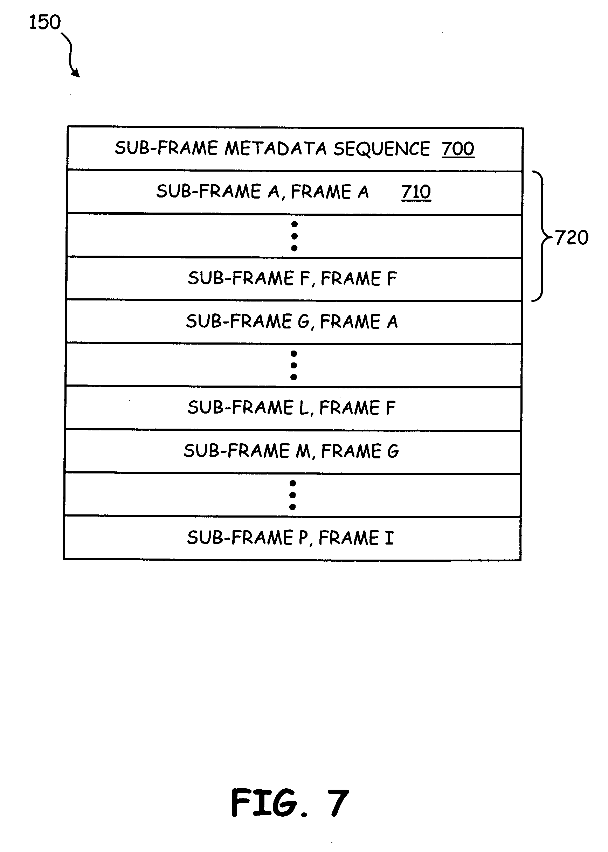

FIG. 7 is a chart illustrating exemplary sub-frame metadata for a sequence of sub-frames. Within the sub-frame metadata 15 shown in FIG. 7 is sequencing metadata 700 that indicates the sequence (i.e., order of display) of the sub-frames. For example, the sequencing metadata 700 can identify a sequence of sub-scenes and a sequence of sub-frames for each sub-scene. Using the example shown in FIG. 7, the sequencing metadata 700 can be divided into groups 720 of sub-frame metadata 15, with each group 720 corresponding to a particular sub-scene.

For example, in the first group 720, the sequencing metadata 700 begins with the first sub-frame (e.g., sub-frame 618a) in the first sequence (e.g., sequence 620) of sub-frames, followed by each additional sub-frame in the first sequence 620. In FIG. 7, the first sub-frame in the first sequence is labeled sub-frame A of original video frame A and the last sub-frame in the first sequence is labeled sub-frame F of original video frame F. After the last sub-frame in the first sequence 620, the sequencing metadata 700 continues with the second group 720, which begins with the first sub-frame (e.g., sub-frame 618b) in the second sequence (e.g., sequence 630) of sub-frames and ends with the last sub-frame in the second sequence 630. In FIG. 7, the first sub-frame in the second sequence is labeled sub-frame G of original video frame A and the last sub-frame in the first sequence is labeled sub-frame L of original video frame F. The final group 720 begins with the first sub-frame (e.g., sub-frame 618c) in the third sequence (e.g., sequence 640) of sub-frames and ends with the last sub-frame in the third sequence 640. In FIG. 7, the first sub-frame in the first sequence is labeled sub-frame M of original video frame G and the last sub-frame in the first sequence is labeled sub-frame P of original video frame I.

Within each group 720 is the sub-frame metadata for each individual sub-frame in the group 720. For example, the first group 720 includes the sub-frame metadata 15 for each of the sub-frames in the first sequence 620 of sub-frames. In an exemplary embodiment, the sub-frame metadata 15 can be organized as a metadata text file containing a number of entries 710. Each entry 710 in the metadata text file includes the sub-frame metadata 15 for a particular sub-frame. Thus, each entry 710 in the metadata text file includes a sub-frame identifier identifying the particular sub-frame associated with the metadata and references one of the frames in the sequence of original video frames.

Examples of editing information include, but are not limited to, a pan direction and pan rate, a zoom rate, a contrast adjustment, a brightness adjustment, a filter parameter, and a video effect parameter. More specifically, associated with a sub-frame, there are several types of editing information that may be applied including those related to: a) visual modification, e.g., brightness, filtering, video effects, contrast and tint adjustments; b) motion information, e.g., panning, acceleration, velocity, direction of sub-frame movement over a sequence of original frames; c) resizing information, e.g., zooming (including zoom in, out and rate) of a sub-frame over a sequence of original frames; and d) supplemental media of any type to be associated, combined or overlaid with those portions of the original video data that falls within the sub-frame (e.g., a text or graphic overlay or supplemental audio.

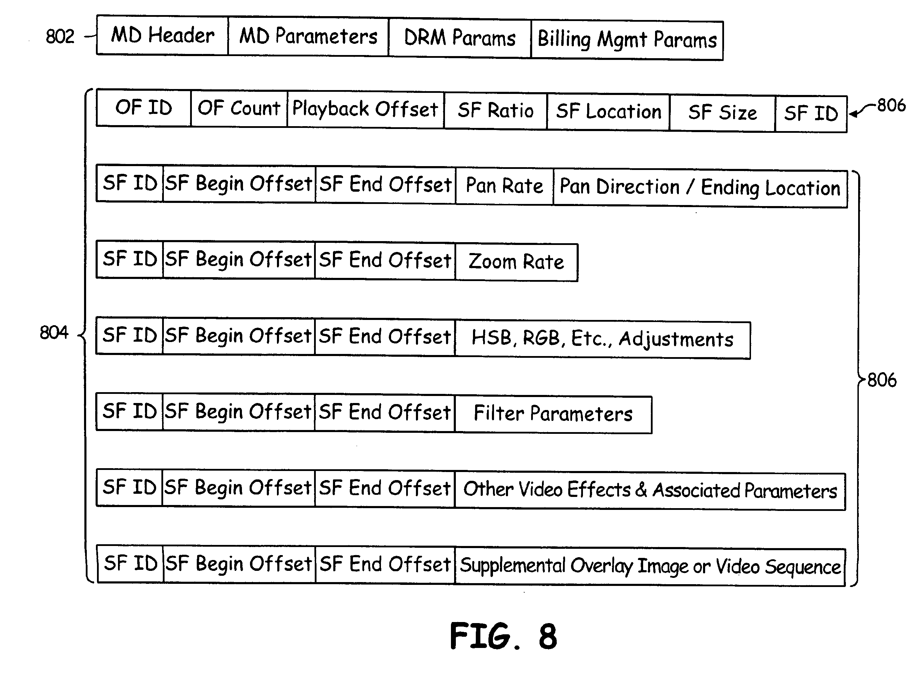

FIG. 8 is a chart illustrating exemplary sub-frame metadata including editing information for a sub-frame. The sub-frame metadata includes a metadata header 802. The metadata header 802 includes metadata parameters, digital rights management parameters, and billing management parameters. The metadata parameters include information regarding the metadata, such as date of creation, date of expiration, creator identification, target video device category/categories, target video device class(es), source video information, and other information that relates generally to all of the metadata. The digital rights management component of the metadata header 802 includes information that is used to determine whether, and to what extent the sub-frame metadata may be used. The billing management parameters of the metadata header 802 include information that may be used to initiate billing operations incurred upon use the metadata.

Sub-frame metadata is found in an entry 804 of the metadata text file. The sub-frame metadata for each sub-frame includes general sub-frame information 806, such as the sub-frame identifier (SF ID) assigned to that sub-frame, information associated with the original video frame (OF ID, OF Count, Playback Offset) from which the sub-frame is taken, the sub-frame location and size (SF Location, SF Size) and the aspect ratio (SF Ratio) of the display on which the sub-frame is to be displayed. In addition, as shown in FIG. 8, the sub-frame information 804 for a particular sub-frame may include editing information 806 for use in editing the sub-frame. Examples of editing information 806 shown in FIG. 8 include a pan direction and pan rate, a zoom rate, a color adjustment, a filter parameter, a supplemental over image or video sequence and other video effects and associated parameters.

FIG. 9 is a schematic block diagram illustrating video processing circuitry according to an embodiment of the present invention. The video processing circuitry 900 supports the SMG or AVP systems of the present invention that were previously described with reference to FIGs. 1 through 8. Video processing circuitry 900 includes processing circuitry 910 and local storage 930 that together store and execute software instructions and process data. Processing circuitry 910 may be a micro processor, a digital signal processor, an application specific integrated circuitry, or another type of circuitry that is operable to process data and execute software operations. Local storage 930 is one or more of random access memory (electronic and magnetic RAM), read only memory, a hard disk drive, an optical drive, and/or other storage capable of storing data and software programs.

The video processing circuitry 900 further includes a display interface 920, one or more user interfaces 917, and one or more communication interfaces 980. When executing the SMG system, the video processing circuitry 900 includes a video camera and/or a video camera interface 990. The video processing system 900 receives a sequence of full frames of video data. When the video camera is included with the video processing circuitry 900, the video camera captures the sequence of full frames video data. The sequence of full frames of video data is stored in local storage 930 as original video frames 115. The display interface 920 couples to one or more displays serviced directly by the video processing circuitry 900. The user input interface 917 couples to one or more user input devices such as a keyboard, a mouse or another user input device. The communication interface(s) 980 may couple to a data network, to a DVD writer, or to another communication link that allows information to be brought into the video processing circuitry 900 and written from the video processing circuitry 900.

The local storage 930 stores an operating system 940 that is executable by the processing circuitry 910. Likewise, local storage 930 stores software instructions that enable the SMG functionality and/or the AVP functionality 950. Upon execution of the SMG and/or AVP software instructions 950, by the processing circuitry 910, video processing circuitry 900 executes the operations of the SMG functionality and/or AVP functionality.

Video processing circuitry 900 stores original video frames 11 (source video, encoded or decoded) and sub-frame metadata 15 (similar display metadata and/or target display metadata) after capture or creation. When the video processing circuitry 900 executes the SMG system, the video processing circuitry 900 creates the metadata 15 and stores it in local storage as sub-frame metadata 15. When the video processing circuitry 900 executes the AVP system, the video processing circuitry 900 may receive the sub-frame metadata 15 via the communication interface 980 for subsequent use in processing original video frames (or source video 12 or 14) that is also received via communication interface 980. The video processing circuitry 900 also stores in local storage 930 software instructions that upon execution enable encoder and/or decoder operations 960.

In one particular operation, the processing circuitry 910 applies decoding and sub-frame processing operations to video to generate both a first sequence of sub-frames of video data and a second sequence of sub-frames of video data. The first sequence of sub-frames of video data corresponds to a different region within the sequence of full frames of video data than that of the second sequence of sub-frames of video data. Further, the processing circuitry 910 generates a third sequence of sub-frames of video data by combining the first sequence of sub-frames of video data with the second sequence of sub-frames of video data.

The processing circuitry 910 may encode the third sequence of sub-frames of video data. The decoding and sub-frame processing may be applied by the processing circuitry 910 and encoder/decoder 960 in sequence. The decoding and sub-frame processing applied by the processing circuitry 910 may be integrated. The processing circuitry may carry out the sub-frame processing pursuant to sub-frame metadata 15. The processing circuitry 910 may tailor the sub-frame metadata based on a characteristic of a target display device before carrying out the sub-frame processing. The processing circuitry 910 may tailor the third sequence of sub-frames of video data based on a characteristic of a target display device.

According to another operation, the processing circuitry 910 applies sub-frame processing to the original video frames 11 to generate both a first sequence of sub-frames of video data and a second sequence of sub-frames of video data. The first sequence of sub-frames of video data is defined by at least a first parameter and the second sequence of sub-frames of video data is defined by at least a second parameter. Both the at least the first parameter and the at least the second parameter together are metadata 15. The processing circuitry 910 receives the metadata 15 for the sub-frame processing and generates a third sequence of sub-frames of video data by combining the first sequence of sub-frames of video data with the second sequence of sub-frames of video data. The third sequence of sub-frames of video data may be delivered for presentation on a target display. The processing circuitry 910 may tailor the metadata before performing the sub-frame processing. The processing circuitry 910 may adapt the third sequence of sub-frames of video data for presentation on a target display.

FIG. 10 is a schematic block diagram illustrating adaptive video processing circuitry (of a client system such as a video player, a video display, or a video player system) constructed and operating according to an embodiment of the present invention. The adaptive processing circuitry 1000 includes a decoder 1002, metadata processing circuitry 1004, metadata storage/tailoring circuitry 1006, management circuitry 1008, and video storage 1014. The adaptive processing circuitry 1000 may also include target display tailoring circuitry 1010 and an encoder 1012. The adaptive processing circuitry 1000 receives raw source video 16, encoded source video 14, similar display metadata 16, and/or target display information 20.

The decoder 1002 of the adaptive video processing circuitry 1000 receives the encoded source video 14 and de-encodes the encoded source video 14 to produce raw video. Alternatively, the raw source video 16 is received directly by the adaptive video processing circuitry 1000. The raw video 16 may be stored by video storage 1014 Metadata tailoring circuitry 1006 receives the similar display metadata 16 and management circuitry receives target display information 20 and DRM/Billing data 1016. Management circuitry may also exchange DRM/billing data 1016 with billing/DRM server 36.

In its operations, the metadata processing circuitry 1004 processes raw video and metadata 15 (similar display metadata 16 or tailored metadata 32) to produce output to target display tailoring circuitry 1010. Metadata tailoring circuitry 1006 receives similar display metadata 16 and, based upon interface data received from management circuitry 1008, produces the tailored metadata 32. The management circuitry 1008 receives the target display information 20 and the DRM/Billing data 1016 and produces output to one or more of the metadata tailoring circuitry 1006, the decoder 1002, the metadata processing circuitry 1004, and the target display tailoring circuitry 1010. The metadata processing circuitry 1004, based upon tailored metadata 32 received from metadata tailoring circuitry 1006, processes the raw video to produce an output that may be further tailored by the target display tailoring circuitry 1010 to produce target display video 36. The target display video 36 may be encoded by the encoder 1012 to produce the encoded target display video 34.

Each of the components of the adaptive processing circuitry 1000 of FIG. 10 may have its operation based upon any and all of the inputs it receives. For example, decoder 1002 may tailor its operations to encode the encoded source video 14 based upon information received by management circuitry 1008. This processing may be based upon the target display information 20. Further, the metadata tailoring circuitry 1006 may modify the similar display metadata 16, based upon information received from management circuitry 1008, to produce the tailored metadata 32. The information received from management circuitry 1008 by the metadata tailoring circuitry 1006 is based upon target display information 20. The similar display metadata 16 may correspond to a group or classification of target displays having similar properties. However, the adaptive processing circuitry 1000 desires to produce tailored metadata 32 respective to a particular target display. Thus, the metadata tailoring circuitry 1006 modifies the similar display metadata 16 based upon the target display information 20 and related information produced by management circuitry 1008 to modify the similar display metadata 16 to produce the tailored metadata 32.

The metadata processing circuitry 1004 may modify the raw video to produce display video based upon the similar display metadata 16. Alternatively, the metadata processing circuitry 1004 processes the raw video to produce an output based upon the tailored metadata 32. However, the metadata processing circuitry 1004 may not produce display video in a final form. Thus, the target display tailoring circuitry 1010 may use the additional information provided to it by management circuitry 1008 (based upon the target display information 20) to further tailor the display video to produce the target display video 36. The tailoring performed by the target display tailoring circuitry 1010 is also represented in the encoded target display video 34 produced by encoder 1012.

The Video storage 1014 stores raw source video 16 and may also store encoded source video 14. The video storage 1014 may receive the raw source video 16 that is input to the client system 1000. Alternatively, the video storage 1014 may receive the raw video from the output of decoder 1002. Metadata processing circuitry 1004 operates upon raw video that is either received from an outside source or from video storage 1014. The management circuitry 1008 interacts with the billing/DRM server 36 of FIG. 1 to perform digital rights management and billing operations. In performing the digital rights management and billing operations, the management circuitry 1008 would exchange DRM/billing data with the billing/DRM server 36.

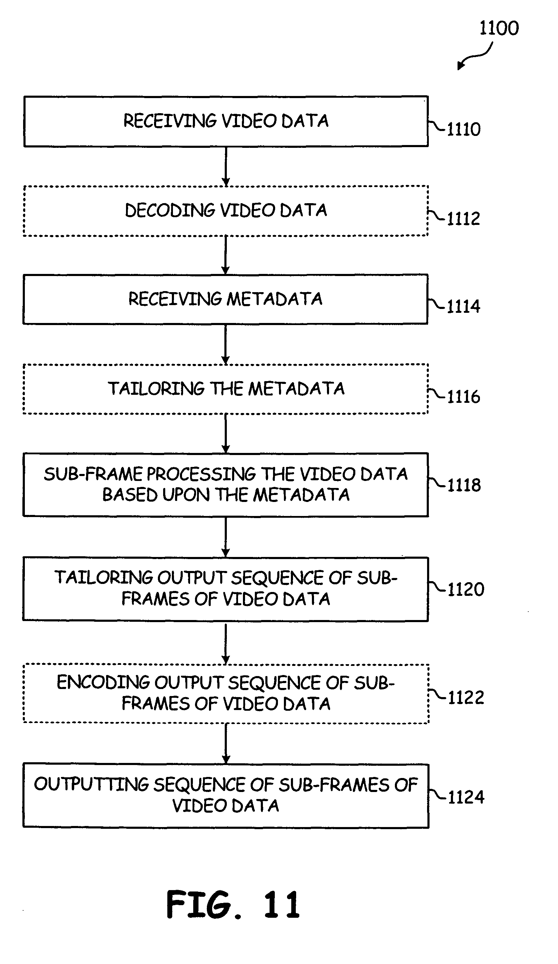

FIG. 11 is a flow chart illustrating a process for video processing according to an embodiment of the present invention. Operations 1100 of video processing circuitry according to the present invention commence with receiving video data (Step 1110). When the video data is received in an encoded format, the video processing circuitry decodes the video data (Step 1112). The video processing circuitry then receives metadata (Step 1114). This metadata may be general metadata as was described previously herein, similar metadata, or tailored metadata. When similar metadata or general metadata is received, the operation of FIG. 11 includes tailoring the metadata (Step 1116) based upon target display information. Step 1116 is optional.

Then, operation of FIG. 11 includes sub-frame processing the video data based upon the metadata (Step 1118). Then, operation includes tailoring an output sequence of sub-frames of video data produced at Step 1118 based upon target display information 20 (Step 1120). The operation of Step 1120 produces a tailored output sequence of sub-frames of video data. Then, this output sequence of sub-frames of video data is optionally encoded (Step 1122). Finally, the sequence of sub-frames of video data is output to storage, output to a target device via a network, or output in another fashion or to another locale (Step 1124).

According to one particular embodiment of FIG. 11, a video processing system receives video data representative of a sequence of full frames of video data. The video processing system then sub-frame processes the video data to generate both a first sequence of sub-frames of video data and a second sequence of sub-frames of video data. The first sequence of sub-frames of video data is defined by at least a first parameter, the second sequence of sub-frames of video data is defined by at least a second parameter, and the at least the first parameter and the at least the second parameter together comprise metadata. The video processing system then generates a third sequence of sub-frames of video data by combining the first sequence of sub-frames of video data with the second sequence of sub-frames of video data.

With this embodiment, the first sequence of sub-frames of video data may correspond to a first region within the sequence of full frames of video data and the second sequence of sub-frames of video data may correspond to a second region within the sequence of full frames of video data, with the first region different from the second region.

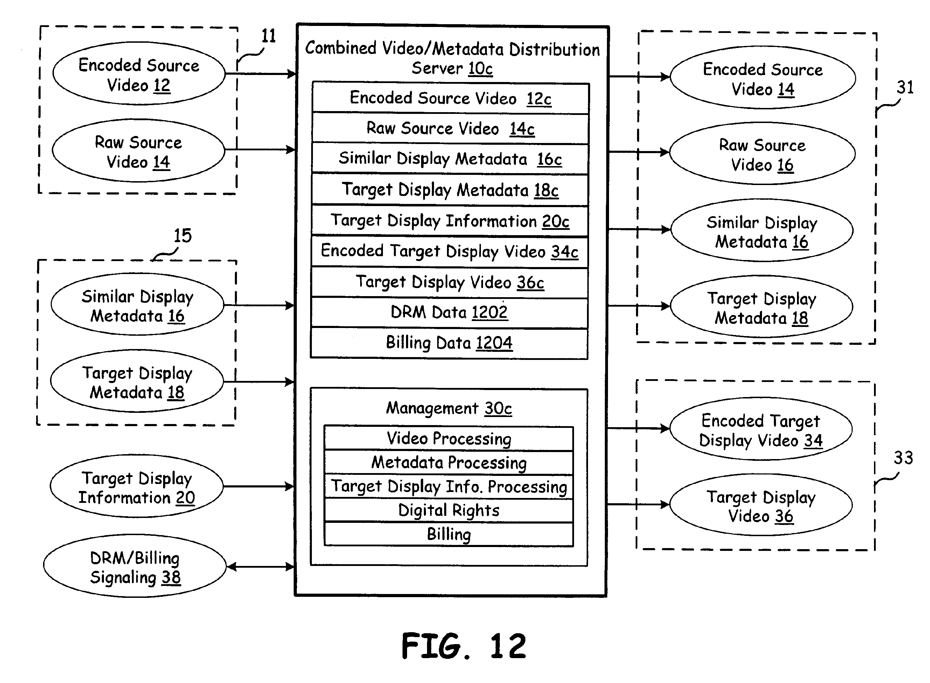

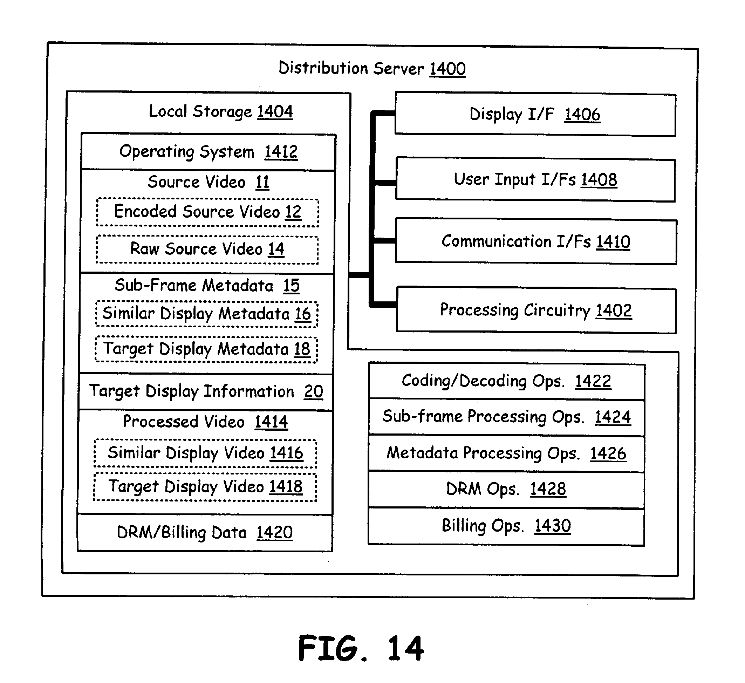

FIG. 12 is a functional block diagram illustrating a combined video/metadata distribution server constructed and operating according to an embodiment of the present invention. The combined video/metadata distribution server 10c may be implemented as hardware, software, or a combination of hardware and software. In some embodiments, the combined video/metadata distribution server 10c is a general purpose microprocessor, a special purpose microprocessor, a digital signal processor, an application specific integrated circuit, or other digital logic that is operable to execute software instructions and to process data so that it may accomplish the functions described with reference to FIGs. 1-11 and 15-16. One example of the structure of the combined video/metadata distribution sever 1400 of the present invention is illustrated in FIG. 14 and will be further described herein with reference thereto.

The combined video/metadata distribution server 10c receives one or more of a plurality of inputs and produces one or more of a plurality of outputs. Generally, the combined video/metadata distribution server 10c receives a sequence of full frames of video data 11, metadata 15, and target display information 20. The sequence of full frames of video data 11 may be either encoded source video 12 or raw source video 14. The sequence of full frames of video data 11 are those that may be captured by a video camera or capture system that is further described with reference to FIGs. 3 through 9. The sequence of full frames of video data 11 may be received directly from a camera, may be received from a storage device such as a server, or may be received via a media such as a DVD.

The combined video/metadata distribution server 10c may receive the sequence of full frames of video data 11 directly from a camera via a wired or wireless connection or may receive the sequence of full frames of video data 11 from a storage device via a wired or wireless connection. The wired or wireless connection may be serviced by one or a combination of a Wireless Local Area Network (WLAN), a Wide Area Network (WAN), the Internet, a Local Area Network (LAN), a satellite network, a cable network, or a combination of these types of networks. Upon receipt of the sequence of full frames of video data 11, the combined video/metadata distribution server 10c may store the sequence of full frames of video data in memory or may operate immediately upon the sequence of full frames of video data 11 using temporary storage as is required.

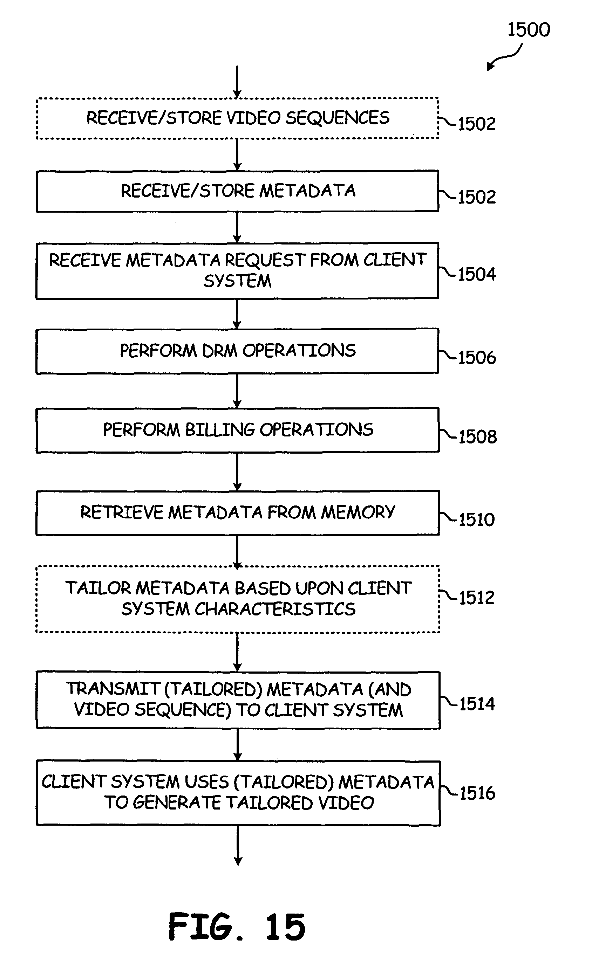

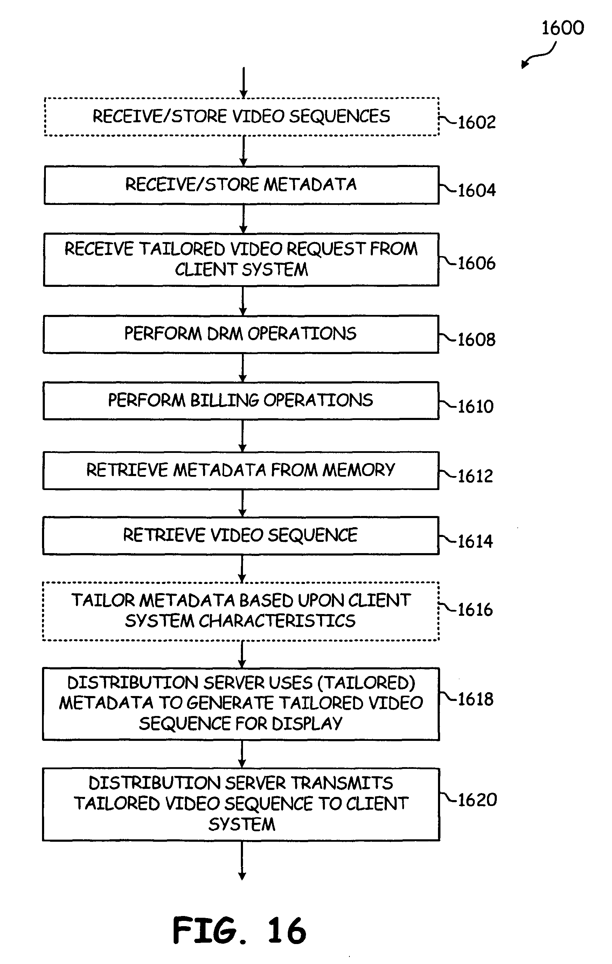

A second input that is received by the combined video/metadata distribution server 10c is metadata 15. The metadata 15 includes similar display metadata 16 and/or target display metadata 18. Generally, and as has been described herein with reference to FIGs. 2 through 11, metadata 15 is information that is employed by the combined video/metadata distribution server 10c to modify the sequence of full frames of video data 11 to produce output intended for display on one or more target video devices. The manner in which the metadata 15 is used to modify the sequence of full frames of video data 11 was described in particular with reference to FIGs. 6 through 10 and will be described further with reference to FIGs. 15 and 16.

As evident from titles of the similar display metadata 16 and the target display metadata 18, the particular metadata received by the combined video/metadata distribution server 10c may be particularly directed towards a target display or generally directed toward a group of target displays. For example, the similar display metadata 16 may include particular metadata for a group of similar displays. Such similar displays may have screen resolutions that are common, aspect ratios that are common, and/or other characteristics that are common to the group. The target display metadata 18 corresponds to one particular target display of a target video player. The target display metadata 18 is particularly tailored for use in modifying the sequence of full frames of video data 11 to produce target display video.

An additional input that may be received by the combined video/metadata distribution server 10c is target display information 20. The target display information 20 may include the screen resolution of a target display of a target video player, the aspect ratio of the target display of the target video player, format of information of video data to be received by the target display of the target video player, or other information specific to the target display of the target video player. The combined video/metadata distribution server 10c may use the target display information 20 for further modification of either/both the sequence of full frames of video data and the metadata 15 or for tailoring output video to a particular target display of a target video player.

In its various operations, the combined video/metadata distribution server 10c produces two types of video outputs as well as DRM/billing signals 38. A first type of output 31 includes encoded source video 14, raw source video 16, similar display metadata 16, and target display metadata 32. The encoded source video 14 is simply fed through by the combined video/metadata distribution server 10c as an output. Likewise, the raw source video 16 is simply fed through by the combined video/metadata distribution server 10c as an output. The target display metadata 18 is either fed through or generated by processing the similar display metadata 16 and/or the target display metadata 18 based upon the target display information 20. The target display metadata 18 is to be used by a target video player system having a target display for creating video that is tailored to the target display. The target video player system may use the target display metadata 18 in conjunction with one or more of the encoded source video 12 and the raw source video 14 in creating display information for the target display device.

The second type of output produced by the combined video/metadata distribution server 10c is display video 33 that includes encoded target display video 34 and/or target display video 36. These outputs 34 and 36 are created by the combined video/metadata distribution server 10c for presentation upon a target display of a target video player system. Each of the encoded target video 34 and the target display video 36 are created based upon the video input 11, the metadata 15, and target display information 20. The manner in which the encoded target display video 34 and the target display video 36 are created depends upon particular operations of the combined video/metadata distribution server 10c. Some of these particular operations of the combined video/metadata distribution server 10c will be described further herein with respect to FIGs. 15 through 16.

The management circuitry 30c of the combined video/metadata distribution server 10c performs video processing operations, metadata processing operations, target display information processing operations, DRM operations, and billing operations. The DRM operations of the combined video/metadata distribution server 10c consider not only the incoming source video 11 and the incoming metadata 15 but also the outputs 31 and 33. The DRM operations may operate in conjunction with a remote DRM/billing server 36 and/or other devices to ensure that its operations to not violate intellectual property interests of owners.

The billing operations of the management circuitry 30c initiate subscriber billing for the operations performed by the combined video/metadata distribution server 10c. For example, a user of a target video player system (client system) requests the combined video/metadata distribution server 10c to prepare target display video 36 from raw source video 14. The DRM operations of the management circuitry 30c first determine whether the subscriber (using target video player system) has rights to access the raw source video 14, the metadata 15, and the target display information 20 that will be used to create the target display video 36. Then the billing operations of the management circuitry 30c initiates billing operations, which may cause the subscriber to be billed or otherwise be notified if any costs are to be accessed.

With one example of operation of the combined video/metadata distribution server 10c, the combined video/metadata distribution server 10c receives encoded source video 12. The combined video/metadata distribution server 10c then de-encodes the encoded source video 12. The combined video/metadata distribution server 10c then operates upon the de-encoded source video using metadata 15 and/or target display information 20 to create target display video 36. Then, the combined video/metadata distribution server 10c encodes the target display video 36 to create the encoded target display video 34. The encoded target display video 34 is created particularly for presentation on a target display. Thus, the target display metadata 18 and/or the target display information 20 is used to process the unencoded source video to create target display video that is tailored to a particular target video device and its corresponding target display. The target display video has resolution, aspect ratio, frame rate, etc. corresponding to the target display. When encoded target source video 34 is produced, it has these properties as well as an encoding format tailored to the target display.

In another example of operation of the combined video/metadata distribution server 10c, the combined video/metadata distribution server 10c receives raw source video 14. The raw source video 14 includes a sequence of full frames of video data. The combined video/metadata distribution server 10c processes the raw source video 14, the metadata 15, and the target display information 20 to create target display video 36. As contrasted to the operation of creating the encoded target display video 34, the combined video/metadata distribution server 10c does not encode the target display 36.

With another operation of the combined video/metadata distribution server 10c, the combined video/metadata distribution server 10c receives similar display metadata 16 and target display information 20. The similar display metadata 16 received by the combined video/metadata distribution server 10c is not specific to a target display of a target video player but is specific to a class of video displays having some common characteristics. The combined video/metadata distribution server 10c employs metadata processing operations to modify the similar display metadata 16 based upon the target display information 20 to produce tailored metadata 32 specific for one or more particular target video displays.

The combined video/metadata distribution server 10c may process metadata and source video to produce encoded target video 34 and/or target display video 36 and then store it for later distribution. For example, when the combined video/metadata distribution server 10c is requested to produce target display video 33 for a first target display video player, the combined video/metadata distribution server 10c stores a copy of the target display video 33 that is produced. Then, during a subsequent operation, when a differing target video player/client system requests target display video for an equivalent video display, the combined video/metadata distribution server 10c accesses the previously generated stored video and distributes the stored video to the requesting client system. The combined video/metadata distribution server 10c may further perform these operations for target display metadata 18 that the management circuitry 30c produces. Thus, for example, when the combined video/metadata distribution server 10c operates upon similar display metadata 16 to produce target display metadata 18 based upon target display information 20, the combined video/metadata distribution server 10c stores a copy of the target display metadata 18c in its memory. Subsequently, the combined video/metadata distribution server 10c distributes the target display metadata 18c to another requesting client system.

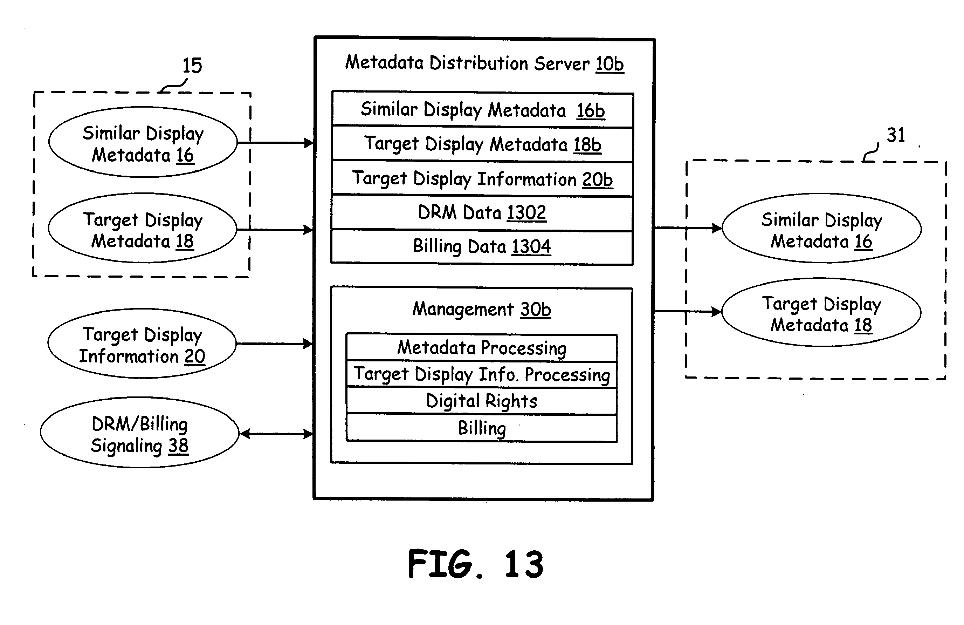

FIG. 13 is a functional block diagram illustrating a metadata distribution server constructed and operating according to an embodiment of the present invention. The metadata distribution server 10b stores and distributes similar display metadata 16b, target display metadata 18b, target display information 20b, DRM data 1302, and billing data 1304. The metadata distribution server 10b further includes management circuitry 30b that performs metadata processing operations, target display information processing operations, DRM operations, and billing operations. The physical structure of the metadata distribution server 10 includes the same/similar structural components as the combined video/metadata distribution sever 1400 of FIG. 14 includes, and as will be further described herein with reference thereto..

In its operations, the metadata distribution server 10b receives metadata that may include similar display metadata 16 and target display metadata 18. The metadata distribution server 10b stores the similar display metadata 16 as similar display metadata 16b and stores target display metadata 18 as target display metadata 18b. The metadata distribution server 10b may simply serve the sub-frame metadata 16b and 18b as output 31 (display metadata 16 and target display metadata 18). Further, in its operations, the metadata distribution server 10b may process the similar display metadata 16b to produce the target display metadata 18b. Such processing of the similar display metadata 16b to produce the target display metadata 18b is based upon target display information 20b received as an input and performed by management circuitry 30b metadata processing operations. Then, the metadata distribution server 10b distributes the target display metadata 18b.

The metadata distribution server 10b also supports DRM and billing operations using its management circuitry 30b operations. In one example of this operation, a client system requests that metadata distribution server 10b provide target display metadata 18 to be used in performing sub-frame processing of video data by the client system. However, before the metadata distribution server 10b serves the target display metadata 18 to the requesting client system, the DRM and billing operations of the management circuitry 30b determines whether the client system has rights to receive the target display metadata 18. In determining whether the client system has rights to receive the target display metadata 18, the metadata distribution server 10b may interact with a billing/DRM server 36 to exchange DRM/billing information via DRM/billing signaling 38. The metadata distribution server 10b then serves the target display metadata 18 to the requesting client system and accounts for this operation for subsequent billing and DRM operations.

FIG. 14 is a schematic block diagram illustrating a metadata distribution server constructed and operating according to an embodiment of the present invention. The structure of a video distribution server 10a and/or a metadata distribution server 10b constructed according to the present invention would have a similar construction but with differing functions supported. The combined video/metadata distribution server 1400 includes processing circuitry 1402, local storage 1404, a display interface 1406, one or more user input interfaces 1408, and one or more communication interfaces 1410 couple by one or more communication buses. The processing circuitry 1402 may include a microprocessor, a digital signal processor, an application specific processor, one or more state machines, and/or any type of circuitry capable of processing data and executing software instructions to accomplish the operations of the present invention. The local storage 1404 includes one ore more of random access memory, read-only memory, a hard disk drive, an optical disk drive, and/or another type of storage capable of storing data and software instructions. Interaction between the processing circuitry 1402 and local storage 1404 causes instructions and data to be transferred between the local storage 1404 and the processing circuitry 1402. With this transfer of data and software instructions, the processing circuitry 1402 is capable of executing logical operations to enable the teachings of the present invention.

The display interface 1406 supports one or more video displays that allow a user to interact with combined video/metadata distribution server 1400. User input interfaces 1408 support one or more user input devices such as keyboards, computer mice, voice interfaces, and/or other types of interfaces that allow user to input instructions in data to the combined video/metadata distribution server 1400. Communication interfaces 1410 interface the combined video/metadata distribution server 1400 to other devices for accomplishment of operations to the present invention. Referring briefly to FIG. 1, the combined video/metadata distribution server 1400 (10c) interfaces with servers 10a and 10b and video players 20, 26, and 28 via the communication infrastructure 156. Further, the communication interface 1410 supports communication between combined video/metadata distribution server 1400 (10c) and player information server 34 and billing/DRM servers 36.

Referring again to FIG. 14, the local storage 1404 stores software instructions and data that, upon execution, support operations according to the present invention as well as additional operations. The local storage 1404 stores an operating system 1412 that generally enables the operations of the combined video/metadata distribution server 1400. Local storage 1404 stores source video 11 that includes one or more of encoded source video 12 and raw source video 14. Local storage 1404 stores sub-frame metadata 15 that includes one or more similar display metadata 16 and target display metadata 18. Local storage 1404 stores target display information 20. Further, the local storage 1404 stores similar display video 1416 and target display video 1418. Finally, local storage 1404 stores DRM/billing data 1420.

The local storage 1404 also stores software instructions and data that support the operations of the combined video/metadata distribution server 1400. These operations include encoding/decoding operations 1422, sub-frame processing operations 1424, metadata processing operations 1426, DRM operations 1428, and/or billing operations 1430. These operations 1422 - 1430 and the stored data 11, 15, 20, 1414, and 1420 enable the combined video/metadata distribution server 1400 to support the operation of the present invention as were previously described with reference to FIGs. 1 - 13 and that will be subsequently described with reference to FIGs. 15 and 16.

FIG. 15 is a flow chart illustrating metadata/video distribution and processing operations according to an embodiment of the present invention. Operation commences with the distribution server receiving and storing video sequences (Step 1502). The video sequences may be original video sequences or previously processed sub-frame video sequences. The distribution server then receives and stores metadata (Step 1502). The metadata corresponds to a class of target displays (client systems) or to particular displays of target client systems.

Operation continues with the distribution server receiving a metadata request from a client system (Step 1504). This metadata request may include a make and model of a destination display of a client system, particularly identified metadata, or a general metadata request for a class of displays. Next, the distribution server performs digital rights management operations (Step 1506) to determine whether the requesting client system has rights to obtain the requested metadata. If the requesting client system does not have rights to obtain the metadata, operation from Step 1506 ends. However, if the client system does have such rights to obtain the metadata, the distribution server performs billing operations (Step 1508). With these billing operations, the distribution server may determine that the client system has previously paid for the requested metadata. Alternatively, the distribution server may determine that the requesting client system must additionally pay in order to receive the metadata and performs billing operations to cause such additional billing to be accomplished.

Then, the distribution server retrieves the requested metadata from memory (Step 1510). However, the distribution server may determine that it does not have the exact requested metadata. In such case, the distribution server retrieve from memory similar metadata 16 and then tailors the similar metadata based upon client system characteristics/target display information (Step 1512) to produce tailored metadata 32 (Step 1512). Then, the distribution server transmits the metadata to the client system (Step 1514). The transmitted metadata may be one or more of the similar display metadata 16 and/or the target display metadata 18. Further, when the distribution server also stores video data, the distribution server may transmit a requested video sequence to the client system at Step 1514. Then, the client system uses the metadata to generate tailored video for its corresponding display (Step 1516). From Step 1516, operation ends.

FIG. 16 is a flow chart illustrating metadata/video distribution and processing operations according to an embodiment of the present invention. The operations 1600 of FIG. 16 commence with the distribution server optionally receiving and storing video sequences (Step 1602). Then, operation 1600 continues with the distribution server receiving and storing metadata (Step 1604). Next, the distribution server receives a tailored video request from a client system (Step 1606). This request may identify the client system based upon a serial number of a corresponding display, a make and model of a corresponding display, or other information that allows the distribution server to determine what particular version of sub-frame processed video it should provide to the client system.

The distribution server then performs DRM operations at Step 1608 and billing operations at Step 1610. At one of Steps 1608 and 1610, the distribution server may determine that the requesting client system does not have rights to receive the requested tailored video and may cause operation to end at such point. Alternatively, the distribution server may determine that the requesting client system does have rights to obtain the requested tailored video and bill or indicate accordingly.

The distribution server then retrieves metadata from memory (Step 1612) and also retrieves a video sequence from memory (Step 1614). Then, optionally, the distribution server tailors the metadata based upon client system/target display characteristics (Step 1616). As has been previously described herein with reference to FIGs. 1-15, the processing accomplished by the distribution server may take one of a number of different forms in any particular sequence. For example, the distribution server may retrieve source video from memory and process the source video. Alternatively, the distribution server may determine that the requested tailored video is stored in memory and may simply retrieve such tailored video at Step 1612. Further, the distribution server may access tailored metadata or similar display metadata from memory. When similar display metadata is accessed from memory, the distribution server executes the operations of Step 1616 to optionally tailor the metadata based on the client system characteristics. Further, when the distribution server does not have tailored video stored that would satisfy the tailored video request, the client system (Step 1606), the distribution uses tailored metadata or similar metadata to generate a tailored video sequence for the display of the client systems (Step 1618). Then, the distribution server transmits the tailored video sequence to the client system (Step 1620). From Step 1620, operation ends.

As one of ordinary skill in the art will appreciate, the terms "operably coupled" and "communicatively coupled," as may be used herein, include direct coupling and indirect coupling via another component, element, circuit, or module where, for indirect coupling, the intervening component, element, circuit, or module does not modify the information of a signal but may adjust its current level, voltage level, and/or power level. As one of ordinary skill in the art will also appreciate, inferred coupling (i.e., where one element is coupled to another element by inference) includes direct and indirect coupling between two elements in the same manner as "operably coupled" and "communicatively coupled."

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. A video server that operates on encoded video data representing a sequence of full frames of video data, the video server comprising:
a communication interface;
memory operable to store encoded video data and sub-frame metadata;
processing circuitry coupled to the communication interface and to the memory, the processing circuitry operable to:
decode the encoded video data to generate the sequence of full frames of video data;
sub-frame process the sequence of full frames of video data based upon the sub-frame metadata to generate both a first sequence of sub-frames of video data and a second sequence of sub-frames of video data, the first sequence of sub-frames of video data corresponding to a different region within the sequence of full frames of video data than that of the second sequence of sub-frames of video data;
generate a third sequence of sub-frames of video data by combining the first sequence of sub-frames of video data with the second sequence of sub-frames of video data; and
transmit the third sequence of sub-frames of video data via the communication interface.

2. The video server of claim 1, wherein the processing circuitry encodes the third sequence of sub-frames of video data.

3. The video server of claim 1, wherein the decoding and sub-frame processing applied by the processing circuitry are integrated.

4. The video server of claim 1, wherein the processing circuitry tailors the sub-frame metadata based on a characteristic of a target display device before carrying out the sub-frame processing.

5. A distribution server circuitry that supports a full screen sequence of video for a client device, the distribution server circuitry comprising:
a communication interface;
a storage interface;
processing circuitry coupled to the communication interface and to the storage interface;
the processing circuitry retrieving, via the storage interface, both the full screen sequence of video and sub-frame metadata related to the full screen sequence of video, the sub-frame metadata defining a plurality of differing sub-frames within the full screen sequence of video;
the processing circuitry generates tailored video from the full screen sequence of video and the sub-frame metadata; and
the processing circuitry delivers the tailored video to the client device via the communication interface.

6. The distribution server of claim 5, wherein the client device has a display characteristic, and the sub-frame metadata is selected based on the display characteristic.

7. A distribution server, communicatively coupled to a communication network, that supports a plurality of video sequences for a client system, each of the plurality of video sequences representing a series of full frames of video data, the distribution server comprising:
processing circuitry;
communication interface circuitry that communicatively couples the processing circuitry with the client system via the communication network;
memory that contains a plurality of sub-frame metadata that relates to the plurality of video sequences; and
the processing circuitry cooperates with the client system, the cooperation resulting in the application of first sub-frame metadata of the plurality of sub-frame metadata to a first video sequence of the plurality of video sequences to generate tailored video for the client system.

8. The distribution server of claim 7, wherein the cooperation comprising application by the processing circuitry of the first metadata of the plurality of metadata to the first video sequence of the plurality of video sequences to generate the tailored video for the client system.

9. A method for producing tailored video for a client system by a distribution server, the distribution server communicatively coupled to the client system via a communication network and supports a plurality of video sequences for the client system, each of the plurality of video sequences representing a series of full frames of video data, the method comprising:
receiving a request from the client system via the communication network, the request relating to the tailored video;
based upon the request, accessing first sub-frame metadata of a plurality of sub-frame metadata that relates to the plurality of video sequences, the first sub-frame metadata relating to the client system; and
cooperating with the client system to apply the first sub-frame metadata to a first video sequence of the plurality of video sequences to produce the tailored video for the client system.

10. The method of claim 9, wherein cooperating with the client system to apply the first sub-frame metadata to a first video sequence of the plurality of video sequences to produce the tailored video for the client system comprises applying, by the distribution server, the first of the plurality of metadata to the first of the plurality of video sequences to generate the tailored video for the client system.
